# EUROPEAN PATENT APPLICATION

(11) **EP 4 478 827 A1**
(43) Date of publication of application: **18.12.2024**
(21) Application number: 23777677.8
(22) Date of filing: 16.02.2023
(51) Int. Cl.: H04W 76/00

(54) **MULTICAST/BROADCAST SERVICE COMMUNICATION METHOD, APPARATUS AND SYSTEM**

(30) Priority: 28.03.2022 CN 202210311585
(71) Applicant: Huawei Technologies Co., Ltd., Shenzhen, Guangdong 518129 (CN)
(72) Inventor: JIA, Jianxin, Shenzhen, Guangdong 518129 (CN); LI, Meng, Shenzhen, Guangdong 518129 (CN); WU, Wenfu, Shenzhen, Guangdong 518129 (CN); ZONG, Zaifeng, Shenzhen, Guangdong 518129 (CN); ZHU, Fenqin, Shenzhen, Guangdong 518129 (CN)
(74) Representative: Körber, Martin Hans
(86) International application number: PCT/CN2023/076360
(87) International publication number: WO 2023/185298

(57) **Abstract**

Embodiments of this application provide a multicast/broadcast service communication method, an apparatus, and a system. The method includes: a first terminal device receives first information, where the first information indicates activation or release of a first multicast/broadcast session, the first terminal device joins the first multicast/broadcast session, the first terminal device is in a radio resource control inactive state, and the first multicast/broadcast session is used for transmitting a first multicast/broadcast service; and the first terminal device enters a connected state or keeps in the radio resource control inactive state based on the first information. According to the method, a terminal device that is in a radio resource control inactive state and that is allowed to receive a multicast/broadcast service in this state does not enter a connected state, thereby helping reduce network overheads.

## Description

This application claims priority to Chinese Patent Application No. 202210311585.3, filed on March 28, 2022 and entitled "MULTICAST/BROADCAST SERVICE COMMUNICATION METHOD, APPARATUS, AND SYSTEM", which is incorporated herein by reference in its entirety.

### TECHNICAL FIELD

Embodiments of this application relate to the communications field, and more specifically, to a multicast/broadcast service communication method, an apparatus, and a system.

### BACKGROUND

With the development of the mobile internet, multicast and broadcast services (multicast and broadcast service, MBS), such as live broadcast services, public security services, and batch software update services, are experiencing explosive growth. The MBS can provide multimedia services for a large number of users with the same requirements at the same time with fewer resources, so that network resources can be shared.

Due to limited transmission resources of a wireless system, in most cases, a plurality of terminal devices joining a multicast/broadcast session share a paging occasion (paging occasion, PO). For example, a terminal device in an idle state and a terminal device in a radio resource control (radio resource control, RRC) inactive (RRC-inactive) state share a PO. In this case, if a core network element triggers an MBS session activation procedure, both the terminal device in the RRC-inactive state and the terminal device in the idle state listen and detect a group paging message, and the group paging message triggers the terminal device in the RRC-inactive state and the terminal device in the idle state to enter a connected state. Consequently, network signaling overheads of the terminal device that is originally allowed to receive an MBS in the RRC-inactive state are increased.

### SUMMARY

Embodiments of this application provide a multicast/broadcast service communication method, an apparatus, and a system, to help reduce network overheads.

According to a first aspect, a multicast/broadcast service communication method is provided. The method may be performed by a first terminal device, or may be performed by a component (for example, a circuit, a chip, or a chip system) configured in the first terminal device. This is not limited in this application.

The method includes: the first terminal device receives first information, where the first information indicates activation or release of a first multicast/broadcast session, the first terminal device joins the first multicast/broadcast session, the first terminal device is in a radio resource control inactive state, and the first multicast/broadcast session is used for transmitting a first multicast/broadcast service; and the first terminal device enters a connected state or keeps in the radio resource control inactive state based on the first information.

According to the foregoing solution, after receiving event information of a multicast/broadcast session management network element, a first network device sends the first information to the first terminal device based on the event information, and the first terminal device determines, based on the first information, to enter the connected state or keep in the radio resource control inactive state. If the first information indicates activation of the first multicast/broadcast session, the first terminal device may keep in the radio resource control inactive state, so that a terminal device that is in the radio resource control inactive state and that is allowed to receive a multicast/broadcast service in this state does not enter the connected state. This helps reduce network overheads.

With reference to the first aspect, in some implementations of the first aspect, that the first terminal device keeps in the radio resource control inactive state based on the first information includes: the first terminal device keeps in the radio resource control inactive state if the first information indicates activation of the first multicast/broadcast session.

With reference to the first aspect, in some implementations of the first aspect, that the first terminal device keeps in the radio resource control inactive state based on the first information includes: the first terminal device keeps in the radio resource control inactive state if the first information indicates activation of the first multicast/broadcast session and the first terminal device is allowed to receive the first multicast/broadcast service in the radio resource control inactive state; or the first terminal device keeps in the radio resource control inactive state if the first information indicates activation of the first multicast/broadcast session and the first terminal device supports receiving a multicast/broadcast service in the radio resource control inactive state; or the first terminal device keeps in the radio resource control inactive state if the first information indicates activation of the first multicast/broadcast session, the first terminal device supports receiving a multicast/broadcast service in the radio resource control inactive state, and the first terminal device is allowed to receive the first multicast/broadcast service in the radio resource control inactive state.

With reference to the first aspect, in some implementations of the first aspect, that the first terminal device enters a connected state based on the first information includes: the first terminal device enters the connected state if the first information indicates activation of the first multicast/broadcast session and the first terminal device is not allowed to receive the first multicast/broadcast service in the radio resource control inactive state; or the first terminal device enters the connected state if the first information indicates activation of the first multicast/broadcast session and the first terminal device does not support receiving a multicast/broadcast service in the radio resource control inactive state; or the first terminal device enters the connected state if the first information indicates release of the first multicast/broadcast session.

With reference to the first aspect, in some implementations of the first aspect, the first information is from an access network device, an access management network element, a session management network element, a multicast/broadcast session management network element, or an application network element.

With reference to the first aspect, in some implementations of the first aspect, after the first terminal device keeps in the radio resource control inactive state, the method further includes: the first terminal device receives the first multicast/broadcast service by using the first multicast/broadcast session.

With reference to the first aspect, in some implementations of the first aspect, the method further includes: the first terminal device determines, based on at least one of second information and third information, whether the first terminal device is allowed to receive the first multicast/broadcast service in the radio resource control inactive state. The second information indicates that the first terminal device is allowed to receive a multicast/broadcast service in the radio resource control inactive state, and the third information indicates that the first multicast/broadcast service is allowed to be received by a terminal device in the radio resource control inactive state.

Based on the foregoing solution, the first terminal device can determine, based on the second information and/or the third information, whether the first terminal device is allowed to receive the first multicast/broadcast service in the radio resource control inactive state, and further determine to enter the connected state or keep in the radio resource control inactive state.

With reference to the first aspect, in some implementations of the first aspect, the second information is from the access network device, the access management network element, or the session management network element, and the third information is from the access network device, the access management network element, or the session management network element.

With reference to the first aspect, in some implementations of the first aspect, the method further includes: the first terminal device sends fourth information to a first network element, where the fourth information indicates whether the first terminal device supports receiving a multicast/broadcast service in the radio resource control inactive state, and the first network element is the access network device, the access management network element, the session management network element, or the application network element.

With reference to the first aspect, in some implementations of the first aspect, the first terminal device is located in a service area of the first multicast/broadcast session.

According to a second aspect, a multicast/broadcast service communication method is provided. The method may be performed by a first terminal device, or may be performed by a component (for example, a circuit, a chip, or a chip system) configured in the first terminal device. This is not limited in this application.

The method includes: the first terminal device receives an identifier of a first multicast/broadcast session, where the first terminal device joins the first multicast/broadcast session, the first terminal device is in a radio resource control inactive state, and the first multicast/broadcast session is used for transmitting a first multicast/broadcast service; and the first terminal device keeps in the radio resource control inactive state if the first terminal device is allowed to receive the first multicast/broadcast service in the radio resource control inactive state; or the first terminal device keeps in the radio resource control inactive state if the first terminal device supports receiving a multicast/broadcast service in the radio resource control inactive state; or the first terminal device keeps in the radio resource control inactive state if the first terminal device supports receiving a multicast/broadcast service in the radio resource control inactive state and the first terminal device is allowed to receive the first multicast/broadcast service in the radio resource control inactive state.

Based on the foregoing solution, after the first terminal device receives the identifier of the first multicast/broadcast session, the first terminal device keeps in the radio resource control inactive state when the first terminal device is allowed to receive the first multicast/broadcast service in the radio resource control inactive state, or when the first terminal device supports receiving a multicast/broadcast service in the radio resource control inactive state, so that a terminal device in the radio resource control inactive state that can receive the first multicast/broadcast service in the radio resource control inactive state does not enter a connected state, thereby helping reduce network overheads.

With reference to the second aspect, in some implementations of the second aspect, after the first terminal device keeps in the radio resource control inactive state, the method further includes: the first terminal device receives the first multicast/broadcast service by using the first multicast/broadcast session.

With reference to the second aspect, in some implementations of the second aspect, the method further includes: the first terminal device determines, based on at least one of second information and third information, whether the first terminal device is allowed to receive the first multicast/broadcast service in the radio resource control inactive state. The second information indicates that the first terminal device is allowed to receive a multicast/broadcast service in the radio resource control inactive state, and the third information indicates that the first multicast/broadcast service is allowed to be received by a terminal device in the radio resource control inactive state.

Based on the foregoing solution, the first terminal device can determine, based on the second information and/or the third information, whether the first terminal device is allowed to receive the first multicast/broadcast service in the radio resource control inactive state, and further determine to enter the connected state or keep in the radio resource control inactive state.

With reference to the second aspect, in some implementations of the second aspect, the second information is from an access network device, an access management network element, or a session management network element, and the third information is from the access network device, the access management network element, or the session management network element.

With reference to the second aspect, in some implementations of the second aspect, the method further includes: the first terminal device sends fourth information to a first network element, where the fourth information indicates whether the first terminal device supports receiving a multicast/broadcast service in the radio resource control inactive state, and the first network element is the access network device, the access management network element, the session management network element, or an application network element.

With reference to the second aspect, in some implementations of the second aspect, the first terminal device is located in a service area of the first multicast/broadcast session.

According to a third aspect, a multicast/broadcast service communication method is provided. The method may be performed by a first network device, or may be performed by a component (for example, a circuit, a chip, or a chip system) configured in the first network device.

This is not limited in this application.

The method includes: the first network device receives event information, where the event information includes an event identifier or an event type, and the event information indicates activation or release of a first multicast/broadcast session; and the first network device sends sixth information based on the event information, where the sixth information indicates activation or release of the first multicast/broadcast session.

According to the foregoing solution, after receiving the event information of a multicast/broadcast session management network element, the first network device sends first information based on the event information, so that a first terminal device can determine, based on the first information, to enter a connected state or keep in a radio resource control inactive state; or an access network device can determine, based on the first information, whether to send the sixth information to a terminal device, so that a terminal device that is in the radio resource control inactive state and that is allowed to receive a multicast/broadcast service in this state does not enter the connected state, thereby helping reduce network overheads.

With reference to the third aspect, in some implementations of the third aspect, the fifth information includes the event information and/or the first information, and the first information indicates activation or release of the first multicast/broadcast session.

With reference to the third aspect, in some implementations of the third aspect, the fifth information includes the event information, and that the first network device sends fifth information based on the event information includes: the first network device sends the event information.

With reference to the third aspect, in some implementations of the third aspect, the fifth information includes the first information, and that the first network device sends fifth information based on the event information includes: the first network device generates the first information based on the event information; and the first network device sends the first information.

With reference to the third aspect, in some implementations of the third aspect, the first network device is a session management network element, the fifth information includes indication information, the indication information includes the event information and/or the first information, and the indication information indicates activation or release of the first multicast/broadcast session.

With reference to the third aspect, in some implementations of the third aspect, the fifth information is carried in a first message, and the first message is used for requesting reachability of a terminal device.

With reference to the third aspect, in some implementations of the third aspect, the method further includes: the first network device obtains second information and/or third information, where the second information indicates that the terminal device is allowed to receive a multicast/broadcast service in the radio resource control inactive state, the third information indicates that the first multicast/broadcast service is allowed to be received by a terminal device in the radio resource control inactive state, and the first multicast/broadcast session is used for transmitting the first multicast/broadcast service; and the first network device sends the second information and/or the third information to an access management network element or the access network device.

With reference to the third aspect, in some implementations of the third aspect, that the first network device obtains second information and/or third information includes: the first network device receives the second information and/or the third information from the multicast/broadcast session management network element or a policy control function network element.

With reference to the third aspect, in some implementations of the third aspect, the method further includes: the first network device receives fourth information from a terminal device, where the fourth information indicates whether the terminal device supports receiving a multicast/broadcast service in the radio resource control inactive state; and the first network device sends the fourth information to the access management network element or the access network device.

With reference to the third aspect, in some implementations of the third aspect, the first network device is the access management network element, the event information is carried in a first message, and the first message is used for requesting reachability of a terminal device.

With reference to the third aspect, in some implementations of the third aspect, the fifth information is carried in a second message, and the second message includes a group paging message.

With reference to the third aspect, in some implementations of the third aspect, the method further includes: the first network device receives second information and/or third information from a session management network element, where the second information indicates that the terminal device is allowed to receive a multicast/broadcast service in a radio resource control inactive state, the third information indicates that a first multicast/broadcast service is allowed to be received by a terminal device in the radio resource control inactive state, and the first multicast/broadcast session is used for transmitting the first multicast/broadcast service; and the first network device sends the second information and/or the third information to an access network device.

With reference to the third aspect, in some implementations of the third aspect, the method further includes: the first network device obtains fourth information, where the fourth information indicates whether the terminal device supports receiving a multicast/broadcast service in the radio resource control inactive state; and the first network device sends the fourth information to the access network device.

With reference to the third aspect, in some implementations of the third aspect, that the first network device sends the fourth information to the access network device includes: the first network device sends the fourth information to the access network device by using a terminal device context modification request message or an initial context setup request message.

With reference to the third aspect, in some implementations of the third aspect, that the first network device obtains fourth information includes: the first network device receives the fourth information from the terminal device or a unified data management network element.

With reference to the third aspect, in some implementations of the third aspect, the first network device is an access network device, the event information is carried in a second message, and the second message includes a group paging message.

With reference to the third aspect, in some implementations of the third aspect, the fifth information is carried in a third message, the third message is used for paging, and the third message includes an identifier of the first multicast/broadcast session.

With reference to the third aspect, in some implementations of the third aspect, the method further includes: the first network device receives second information and/or third information, where the second information indicates that a terminal device is allowed to receive a multicast/broadcast service in a radio resource control inactive state, the third information indicates that a first multicast/broadcast service is allowed to be received by a terminal device in the radio resource control inactive state, and the first multicast/broadcast session is used for transmitting the first multicast/broadcast service; and the first network device sends the second information and/or the third information to the terminal device.

With reference to the third aspect, in some implementations of the third aspect, the method further includes: the first network device receives fourth information, where the fourth information indicates whether the terminal device supports receiving a multicast/broadcast service in the radio resource control inactive state.

With reference to the third aspect, in some implementations of the third aspect, the fourth information is carried in a terminal device context modification request message or an initial context setup request message.

With reference to the third aspect, in some implementations of the third aspect, the fifth information includes a paging cause, and the paging cause is release or activation of the first multicast/broadcast session.

With reference to the third aspect, in some implementations of the third aspect, the fifth information includes paging event information, and the paging event information indicates that a paging event is release or activation of the first multicast/broadcast session.

According to a fourth aspect, a multicast/broadcast service communication method is provided. The method may be performed by an access network device, or may be performed by a component (for example, a circuit, a chip, or a chip system) configured in the access network device. This is not limited in this application.

The method includes: the access network device receives sixth information, where the sixth information indicates activation of a first multicast/broadcast session, the sixth information is carried in a fourth message, and the fourth message is used for paging; or the access network device receives a fourth message, where the fourth message is used for activating a first multicast/broadcast session; and if terminal devices joining the first multicast/broadcast session include a second terminal device, the access network device skips sending a fifth message, where the fifth message includes an identifier of the first multicast/broadcast session. The second terminal device is in a radio resource control inactive state, and the second terminal device is allowed to receive a first multicast/broadcast service in the radio resource control inactive state, where the first multicast/broadcast session is used for transmitting the first multicast/broadcast service; or the second terminal device is in a radio resource control inactive state, and the second terminal device supports receiving a multicast/broadcast service in the radio resource control inactive state.

Based on the foregoing solution, after receiving the sixth information indicating activation of the first multicast/broadcast session, the access network device does not send the fifth message when the terminal devices joining the first multicast/broadcast session include the second terminal device, where the fifth message is used for group paging. In other words, if the terminal devices joining the first multicast/broadcast session include the second terminal device, the access network device does not use a group paging message. In this way, some terminal devices that join the first multicast/broadcast session are paged, thereby avoiding paging the second terminal device, further preventing the second terminal device from entering the connected state, and helping reduce network resources.

With reference to the fourth aspect, in some implementations of the fourth aspect, the method further includes: the access network device sends a sixth message based on the fourth message, where the sixth message is used for paging a terminal device in an idle state among the terminal devices joining the first multicast/broadcast session.

With reference to the fourth aspect, in some implementations of the fourth aspect, the method further includes: the access network device sends the fifth message if none of the terminal devices joining the first multicast/broadcast session is in the radio resource control inactive state.

With reference to the fourth aspect, in some implementations of the fourth aspect, the method further includes: the access network device determines that the terminal devices joining the first multicast/broadcast session include the second terminal device.

With reference to the fourth aspect, in some implementations of the fourth aspect, the second terminal device is in the radio resource control inactive state, and that the access network device determines that the terminal devices joining the first multicast/broadcast session include the second terminal device includes: the access network device determines that the second terminal device is allowed to receive the first multicast/broadcast service in the radio resource control inactive state.

With reference to the fourth aspect, in some implementations of the fourth aspect, that the access network device determines that the second terminal device is allowed to receive the first multicast/broadcast service in the radio resource control inactive state includes: the access network device determines, based on at least one of second information and third information, that the second terminal device is allowed to receive the first multicast/broadcast service in the radio resource control inactive state. The second information indicates that the second terminal device is allowed to receive a multicast/broadcast service in the radio resource control inactive state, and the third information indicates that the first multicast/broadcast service is allowed to be received by a terminal device in the radio resource control inactive state.

With reference to the fourth aspect, in some implementations of the fourth aspect, the method further includes: the access network device sends at least one of the second information or the third information to the terminal device.

With reference to the fourth aspect, in some implementations of the fourth aspect, the second information is from an access management network element, a session management network element, or a multicast/broadcast session management network element, and the third information is from the access management network element, the session management network element, or the multicast/broadcast session management network element.

With reference to the fourth aspect, in some implementations of the fourth aspect, the second terminal device is in the radio resource control inactive state, and that the access network device determines that the terminal devices joining the first multicast/broadcast session include the second terminal device includes: the access network device determines that the second terminal device supports receiving a multicast/broadcast service in the radio resource control inactive state.

With reference to the fourth aspect, in some implementations of the fourth aspect, that the access network device determines that the second terminal device supports receiving a multicast/broadcast service in the radio resource control inactive state includes: the access network device determines, based on fourth information, that the second terminal device supports receiving a multicast/broadcast service in the radio resource control inactive state, where the fourth information indicates whether the second terminal device supports receiving a multicast/broadcast service in the radio resource control inactive state.

According to a fifth aspect, a multicast/broadcast service communication method is provided. The method may be performed by an access network device, or may be performed by a component (for example, a circuit, a chip, or a chip system) configured in the access network device. This is not limited in this application.

The method includes: an access network device receives a fourth message, where the fourth message is used for paging, the fourth message includes sixth information, and the sixth information indicates release of a first multicast/broadcast session; and the access network device sends a fifth message, where the fifth message includes an identifier of the first multicast/broadcast session.

Based on the foregoing solution, after receiving the sixth information indicating release of the first multicast/broadcast session, the access network device sends the fifth message, where the fifth message is used for group paging. In other words, when the sixth information indicates release of the first multicast/broadcast session, the access network device uses the group paging message. In this way, all terminal devices that join the first multicast/broadcast session are paged, thereby helping reduce network resources.

With reference to the fifth aspect, in some implementations of the fifth aspect, the sixth information is from an access management network element or a session management network element.

According to a sixth aspect, a multicast/broadcast service communication apparatus is provided, where the apparatus is configured to perform the method provided in the first aspect, the second aspect, the third aspect, or the fourth aspect. Specifically, the apparatus may include units and/or modules, such as a processing unit and/or a communication unit, configured to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

In an implementation, the apparatus is a first terminal device. When the apparatus is the first terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first terminal device. When the apparatus is the chip, the chip system, or the circuit used in the first terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is a first access network device. When the apparatus is the first access network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first access network device. When the apparatus is the chip, the chip system, or the circuit used in the first access network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is an access network device. When the apparatus is the access network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the access network device. When the apparatus is the chip, the chip system, or the circuit used in the access network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes: a memory, configured to store a program; at least one processor, configured to execute the computer program or instructions stored in the memory, to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to an eighth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code executed by a device, and the program code includes instructions for performing the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to a tenth aspect, a computer program product including instructions is provided. When the computer program product runs on a computer, the computer is enabled to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to an eleventh aspect, a chip is provided. The chip includes a processor and a communication interface. The processor reads, through the communication interface, instructions stored in a memory, to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

Optionally, in an implementation, the chip further includes the memory, the memory stores a computer program or the instructions, and the processor is configured to execute the computer program or the instructions stored in the memory. When the computer program or the instructions are executed, the processor is configured to perform the method provided in the first aspect or any one of the foregoing implementations of the first aspect, the second aspect or any one of the foregoing implementations of the second aspect, the third aspect or any one of the foregoing implementations of the third aspect, the fourth aspect or any one of the foregoing implementations of the fourth aspect, or the fifth aspect or any one of the foregoing implementations of the fifth aspect.

According to a twelfth aspect, a communication system is provided, including the session management network element in the third aspect or any one of the foregoing implementations of the third aspect, and the access network device in the third aspect or any one of the foregoing implementations of the third aspect.

According to a thirteenth aspect, a communication system is provided, including the session management network element in the third aspect or any one of the foregoing implementations of the third aspect, and the access network device in the fourth aspect or any one of the foregoing implementations of the fourth aspect.

### BRIEF DESCRIPTION OF DRAWINGS

FIG. 1 is a schematic of a network architecture;
FIG. 2 is a schematic of a network architecture for an MBS;
FIG. 3 is a diagram of two transmission manners of MBS data;
FIG. 4 is a diagram of a multicast/broadcast service communication method 200 according to an embodiment of this application;
FIG. 5 is a diagram of another multicast/broadcast service communication method 300 according to an embodiment of this application;
FIG. 6 is a diagram of another multicast/broadcast service communication method 400 according to an embodiment of this application;
FIG. 7 is a diagram of another multicast/broadcast service communication method 500 according to an embodiment of this application;
FIG. 8 is a diagram of another multicast/broadcast service communication method 600 according to an embodiment of this application;
FIG. 9 is a diagram of another multicast/broadcast service communication method 700 according to an embodiment of this application;
FIG. 10 is a diagram of a multicast/broadcast service communication apparatus 800 according to an embodiment of this application; and
FIG. 11 is a diagram of another multicast/broadcast service communication apparatus 900 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a fifth generation (5th generation, 5G) system, a new radio (new radio, NR) system, or another evolved communication system.

The technical solutions provided in this application may be further applied to a future communication system, such as a sixth generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

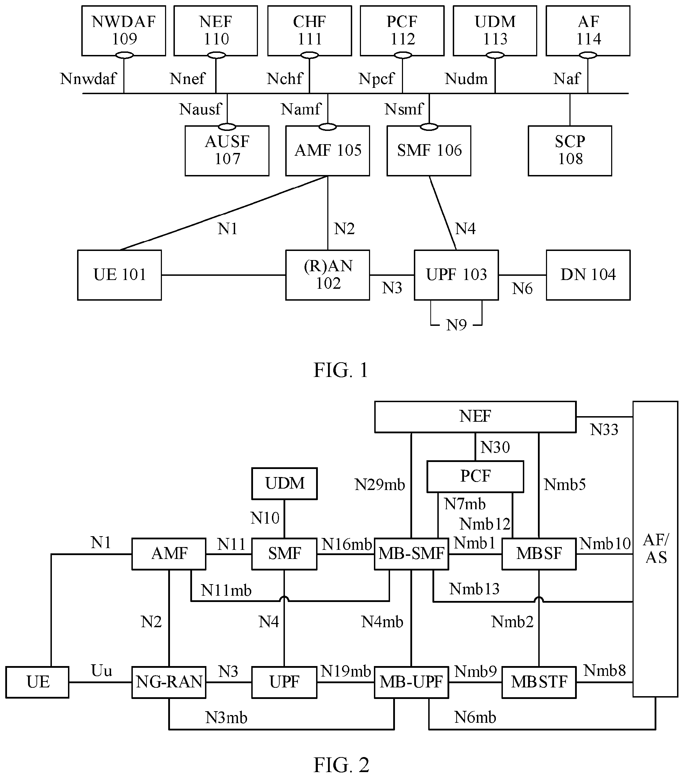

For example, FIG. 1 is a schematic of a network architecture. As shown in FIG. 1, a 5G system (the 5th generation system, 5GS) is used as an example of the network architecture 100. The network architecture may include but is not limited to: user equipment (user equipment, UE) 101, a (radio) access network device ((radio) access network, RAN) 102, a user plane function (user plane function, UPF) network element 103, a data network (data network, DN) network element 104, an access and mobility management function (access and mobility management function, AMF) network element 105, a session management function (session management function, SMF) network element 106, and an application function (application function, AF) network element 114.

Optionally, the network architecture 100 further includes an authentication server function (authentication server function, AUSF) network element 107, a service communication proxy (service communication proxy, SCP) network element 108, a network data analytics function (network data analytics function, NWDAF) network element 109, a network exposure function (network exposure function, NEF) network element 110, a charging function (charging function, CHF) network element 111, a policy control function (policy control function, PCF) network element 112, a unified data management (unified data management, UDM) network element 113, and the like.

The DN may be the internet. The NSSF, the AUSF, the UDM, the NEF, the NRF, the PCF, the AF, the AMF, the SMF, and the UPF are network elements in a core network. Because a 5G system is used as an example in FIG. 1, the core network may be referred to as a 5G core network (5G core network, 5GC or 5GCN).

The following briefly describes network elements shown in FIG. 1.
1. User equipment (user equipment, UE) 101: The UE may be referred to as a terminal device, a terminal, an access terminal, a subscriber unit, a subscriber station, a mobile station, a mobile console, a remote station, a remote terminal, a mobile device, a user terminal, a wireless communication device, a user agent, or a user apparatus.

The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN) or a non-terrestrial network (non-terrestrial network, NTN), or the like; or may be an end device, a logical entity, an intelligent device such as a mobile phone, an intelligent terminal, or another terminal device, or a communication device such as a server, a gateway, a base station, or a controller, or an internet of things (internet of things, IoT) device such as a tag, a passive tag, an active tag, a semi-passive tag, a semi-active tag, a sensor, an electricity meter, or a water meter. The UE may alternatively be an uncrewed aerial vehicle (unmanned aerial vehicle or uncrewed aerial vehicle, UAV) having a communication function. When the terminal is a passive, semi-active, or semi-passive terminal or tag, the terminal may obtain energy to receive or send data. Energy can be obtained from radio frequency, radio, solar energy, light energy, wind energy, water energy, heat energy, kinetic energy, and the like. A manner of obtaining energy by the passive, semi-active, or semi-passive terminal is not limited in this application. It may be understood that when the terminal is a passive terminal, the terminal is not equipped with or does not depend on a power supply device such as a battery, but obtains energy from an environment for functions such as data sensing, transmission, and distributed computing. When the terminal is a semi-active terminal, the terminal may have a built-in battery, but the battery is used to supply power to an internal circuit, and is not used to actively transmit a signal. When the terminal is a semi-passive terminal, the terminal may have a built-in capacitor. The capacitor may store energy obtained by the terminal. For example, the terminal may obtain energy in a manner of obtaining solar energy or the like, and store the energy in the capacitor.

It should be noted that the tag in this application may be in a tag form, or may be in any terminal form.

It should be noted that a terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of a terminal device may be a terminal device, or may be an apparatus, for example, a chip system or a chip, that can support a terminal device in implementing the function. The apparatus may be installed in the terminal device. In embodiments of this application, the chip system may include a chip, or may include a chip and another discrete component.

2. (Radio) access network ((radio) access network, (R)AN) device 102: The (R)AN device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in a 5G system is referred to as a next generation Node Base station (next generation Node Base station, gNB) or a next generation radio access network (next generation radio access network, NG-RAN) device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking between a terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. User plane network element: The user plane network element is configured for packet routing and forwarding, quality of service (quality of service, QoS) handling for user plane data, or the like.

In the 5G communication system, the user plane network element may be a user plane function (user plane function, UPF) network element 103. In a future communication system, the user plane network element may still be the UPF network element, or may have another name. This is not limited in this application.

4. Data network: The data network is configured to provide a network for data transmission.

In the 5G communication system, the data network may be a data network (data network, DN) 104. In the future communication system, the data network may still be a DN, or may have another name. This is not limited in this application.

5. Access management network element: The access management network element is configured for user plane data routing and forwarding, quality of service (quality of service, QoS) handling for user plane data, or the like.

In the 5G communication system, the access management network element may be an access and mobility management function (access and mobility management function, AMF) network element 105. In the future communication system, the access management network element may still be the AMF network element, or may have another name. This is not limited in this application.

6. Session management network element: The session management network element may be configured for session management, allocation and management of an internet protocol (internet protocol, IP) address of a terminal device, selection of a termination point that can manage a user plane function interface and a policy control and charging function interface, downlink data notification, and the like.

In the 5G communication system, the session management network element may be a session management function (session management function, SMF) network element 106. In the future communication system, the session management network element may still be the SMF network element, or may have another name. This is not limited in this application.

7. Authentication server network element: The authentication server network element is mainly responsible for providing authentication services.

In the 5G communication system, the authentication server network element may be an authentication server function (authentication server function, AUSF) network element 107. In the future communication system, the authentication server network element may still be the AUSF network element, or may have another name. This is not limited in this application.

8. Service communication proxy network element: The service communication proxy network element is mainly responsible for indirect communication between network elements and corresponding network element services.

In the 5G communication system, the service communication proxy network element may be a service communication proxy (service communication proxy, SCP) network element 108. In the future communication system, the service communication proxy network element may still be the SCP network element, or may have another name. This is not limited in this application.

9. Network data analytics network element: The network data analytics network element is responsible for collection, statistics collection, analysis and decision feedback on network data, and providing network data collection and analysis functions based on technologies such as big data and artificial intelligence.

In the 5G communication system, the network data analytics network element may be a network data analytics function (network data analytics function, NWDAF) network element 109. In the future communication system, the network data analytics function network element may still be the NWDAF network element, or may have another name. This is not limited in this application.

10. Network exposure network element: The network exposure network element is mainly configured to support exposure of capabilities and events.

In the 5G communication system, the network exposure network element may be a network exposure function (network exposure function, NEF) network element 110. In the future communication system, the network exposure network element may still be an NEF network element, or may have another name. This is not limited in this application.

11. Charging network element: The charging network element serves as a control node for online charging and/or offline charging, and performs online charging and/or offline charging rate handling for various services of user equipment.

In the 5G communication system, the charging network element may be a charging function (charging function, CHF) network element 111. Specifically, the CHF network element may be a converged charging function (converged charging function) network element or an offline only charging function (offline only charging function) network element. In the future communication system, the charging network element may still be the CHF network element, or may have another name. This is not limited in this application.

12. Policy control network element: The policy control network element is a unified policy framework used to govern network behavior, and provides policy rule information or the like for a network element (for example, an AMF or SMF network element) or a terminal device.

In the 5G communication system, the policy control network element may be a policy control function (policy control function, PCF) network element 112. In the future communication system, the policy control network element may still be the PCF network element, or may have another name. This is not limited in this application.

13. Data management network element: The data management network element is configured for terminal device identification handling, access authorization, registration, mobility management, and the like.

In the 5G communication system, the data management network element may be a unified data management (unified data management, UDM) network element 113. In the future communication system, the unified data management network element may still be the UDM network element, or may have another name. This is not limited in this application.

14. Application network element: The application network element is configured to apply application influence on data routing, access a network exposure function network element, interact with a policy framework for policy control, and the like.

In the 5G communication system, the application network element may be an application function (application function, AF) network element. In the future communication system, the application network element may still be the AF network element 114, or may have another name. This is not limited in this application.

It may be understood that the foregoing network elements or the functions may be network elements in a hardware device, software functions running on dedicated hardware, or virtualized functions instantiated on a platform (for example, a cloud platform). A specific form of the foregoing network element is not limited in this application. It should be further understood that the AMF, the SMF, the UPF, the PCF, the NEF, and the like shown in FIG. 1 may be understood as network elements configured to implement different functions, and may be, for example, combined into a network slice as required. These network elements may be independent of each other, or may be integrated into a same device to implement different functions.

For ease of description, that the access management network element is an AMF network element, the session management network element is an SMF network element, and the policy control network element is an AF network element is used as an example for subsequent descriptions in this application. Further, the AMF network element is briefly referred to as an AMF, the SMF network element is briefly referred to as an SMF, and the AF network element is briefly referred to as an AF. To be specific, AMF described below in this application may be replaced with access management network element, SMF described below in this application may be replaced with session management network element, and AF described below in this application may be replaced with application network element.

In the network architecture shown in FIG. 1, the network elements may communicate with each other through interfaces. For example, N1 is an interface between the UE 101 and the AMF 105; N2 is an interface between the (R)AN 102 and the AMF 105, and is configured to send a (non-access stratum, NAS) message and the like; N3 is an interface between the RAN 102 and the UPF 103, and is configured to transmit user plane data and the like; N4 is an interface between the SMF 106 and the UPF 103, and is configured to transmit identifier information of a tunnel connected to N3, data buffering indication information, a downlink data notification message, and the like; an N6 interface is an interface between the UPF 103 and the DN 104, and is configured to transmit user plane data and the like; and N9 is an interface between UPFs. Namf is a service-based interface exhibited by the AMF 105. Nsmf is a service-based interface exhibited by the SMF 106. Nausf is a service-based interface exhibited by the AUSF 107. Nnwdaf is a service-based interface exhibited by the NWDAF 109. Nnef is a service-based interface exhibited by the NEF 110. Nchf is a service-based interface exhibited by the CHF 111. Npcf is a service-based interface exhibited by the PCF 112. Nudm is a service-based interface exhibited by the UDM 113. Naf is a service-based interface exhibited by the AF 114.

It should be noted that names of the network elements and communication interfaces between the network elements in FIG. 1 are briefly described by using an example specified in a current protocol. However, embodiments of this application are not limited to being applicable only to a currently known communication system. Therefore, standard names used when the current protocol is used as an example for description are all function descriptions. A specific name of a network element, an interface, signaling, or the like is not limited in this application, and only represents a function of the network element, the interface, or the signaling, and may be correspondingly extended to another system, for example, a 2G, 3G, 4G, or future communication system.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

FIG. 2 shows a network architecture for a multicast/broadcast service (multicast/broadcast service, MBS). The architecture is extended on the basis of the architecture shown in FIG. 1. For example, two functional entities, such as a multicast/broadcast session management function (multicast/broadcast session management function, MB-SMF) network element and a multicast/broadcast user plane function (multicast broadcast user plane function, MB-UPF) network element are added, to support multicast/broadcast services or functions.

In FIG. 2, the MB-SMF may implement an MBS control plane function, and is responsible for managing a multicast/broadcast service/group/session. From a perspective of a control plane, the MB-SMF may be connected to an MBS server, a multicast/broadcast service function (multicast/broadcast service function, MBSF) network element, or a network exposure function (network exposure function, NEF) network element, to receive related information (for example, MBS description information) of a multicast/broadcast service. In addition, the MB-SMF may be connected to a PCF, to help create resources for a multicast/broadcast service. From a perspective of a user plane, the MB-UPF may be connected to a multicast/broadcast service transport function (multicast/broadcast service transport function, MBSTF), or may be connected to an AF/application server (application server, AS). The MB-UPF is configured to transmit MBS data.

Optionally, the MB-SMF may be integrated into the PCF or an SMF as a functional module, and the MB-UPF may be integrated into a UPF as a functional module, or the MB-SMF and the MB-UPF may be separately deployed. This is not limited in this application.

It should be noted that the foregoing name of the MB-SMF or the MB-UPF is an example. In a 5G network, the MB-SMF or the MB-UPF may have another name. This is not limited in this application.

To facilitate understanding of embodiments of this application, terms used in this application are first briefly described.
1. MBS: The MBS is also referred to as a multicast/broadcast service or a multicast/broadcast communication service (multicast broadcast communication service), including a multicast service and a broadcast service, for example, a security warning service and a map update service.
2. Multicast/broadcast session: The multicast/broadcast session is an MBS session (session), which is also referred to as a multicast/broadcast communication session (multicast broadcast communication session) or a multicast/broadcast service session (multicast broadcast service session), and includes a multicast session and a broadcast session. The multicast/broadcast session is used for transmitting a multicast/broadcast service.

A plurality of terminal devices that receive a same multicast service may belong to one multicast group (multicast group). The multicast group may be a transport-layer concept (that is, a transport group). In this case, if UE expects to receive the multicast service, the UE may send a request to join the multicast group, that is, join a multicast session or the multicast service. The multicast group may be an application-layer concept (that is, a subscription group). In this case, only UE belonging to the multicast group can receive the multicast service. The UE belonging to the multicast group may also be referred to as UE in the multicast group, or may be referred to as a group member.

Currently, a broadcast service does not involve specific group management.

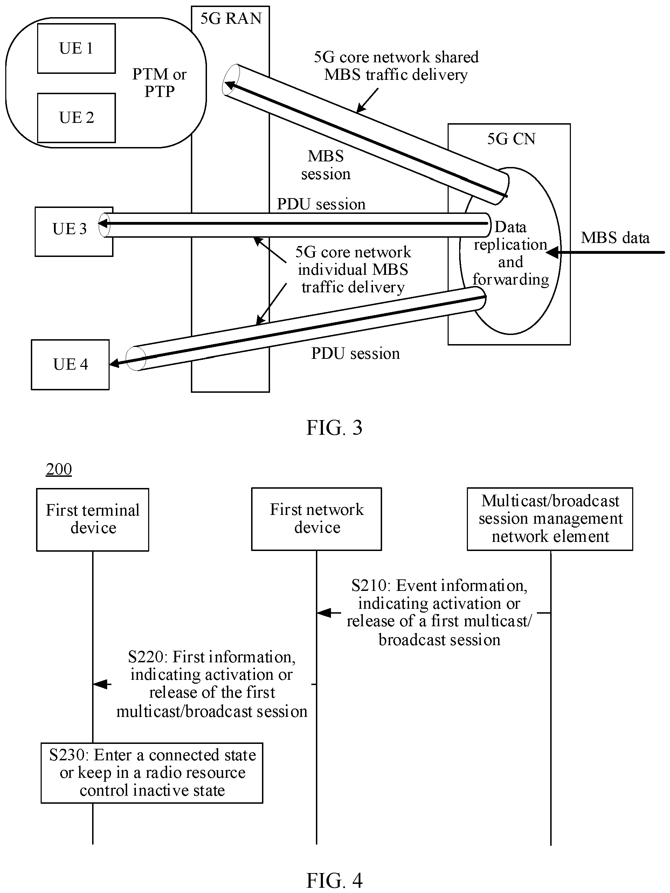

Transmission of MBS data in a system architecture shown in FIG. 3 is used as an example. The MBS data may be sent from a 5G core network (core network, CN) to UE 1, UE 2, UE 3, and UE 4. If an access network device supports a multicast/broadcast function, the access network device may transmit data of a multicast/broadcast service in a 5G core network shared multicast/broadcast service traffic delivery (5GC Shared MBS traffic delivery) manner. For example, in FIG. 3, the 5G CN sends the MBS data to the UE 1 and the UE 2, and the UE 1 and the UE 2 share an MBS session tunnel. In this case, on an air interface, the RAN may send the MBS data to the UE 1 and the UE 2 in a point-to-multipoint (point-to-multipoint, PTM) manner, that is, only one piece of data needs to be sent, and both the UE 1 and the UE 2 can receive the data. The RAN may alternatively send the service data to the UE 1 and the UE 2 separately in a unicast manner, that is, a point-to-point (point-to-point, PTP) manner. If the access network device does not support the multicast/broadcast function, that is, the access network device does not support transmission of multicast/broadcast service data in the 5G core network shared multicast/broadcast service traffic delivery manner, the access network device may transmit the multicast/broadcast service data in a 5G core network individual multicast/broadcast service traffic delivery (5GC Individual MBS traffic delivery) manner. For example, in FIG. 3, the 5G CN sends the MBS data to the UE 3 and the UE 4 by using respective protocol data unit (protocol data unit, PDU) sessions corresponding to the UE 3 and the UE 4.

It should be understood that, after arriving at an access network device (for example, a RAN), multicast/broadcast service data is processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to all UE receiving the multicast/broadcast service data.

### 3. Status of a terminal device

The status of the terminal device includes a connection management connected (connection management connected, CM-connected) state and a connection management idle (connection management idle, CM-idle) state. According to whether radio resource control (radio resource control inactive, RRC-inactive) is in an active state or an inactive state, the CM-connected state may further include two cases.

In one case, both connection management and RRC are in a connected state, that is, CM-connected with RRC_connected. In this case, both an N2 connection related to UE between an AMF and a RAN and an RRC connection between the RAN and the UE are in a connected state. In this application, this state of the UE is referred to as a connected state for short.

In the other case, connection management is in a connected state, but RRC is in an inactive state, that is, CM-CONNECTED with RRC-inactive. In this case, the N2 connection related to the UE between the AMF and the RAN is in a connected state, and a state of the RRC connection between the RAN and the UE may be understood as an inactive (inactive) state or a disconnected state. In this application, this state of the UE is referred to as a radio resource control inactive (radio resource control inactive, RRC-inactive) state or an inactive state for short.

The CM-idle state means that the N2 connection related to the UE between the AMF and the RAN is in a disconnected state, and the RRC connection between the RAN and the UE is also in a disconnected state. In this application, this state of the UE is referred to as an idle state for short.

4. MBS session activation procedure: After receiving downlink MBS data, the MB-UPF reports an event related to MBS data arrival to the MB-SMF, or the AF/AS notifies the MB-SMF of MBS session activation through the control plane. In this case, the MB-SMF may instigate an MBS session activation procedure. This procedure is used for activating an MBS session, so that the MBS data can be sent to the UE.

In an MBS session activation procedure of 3GPP Release 17 (Release-17, R17), a core network first pages a terminal device in an idle state or a radio resource control inactive state among terminal devices joining a multicast session to a connected state. Further, a group member in the connected state can receive MBS data. In 3GPP Release 18 (Release-18, R18), a terminal device is supported to receive MBS data in a radio resource control inactive state. Therefore, a group member that is already allowed to receive MBS data in the RRC-inactive state does not need to enter a connected state.

In other words, in R18, if a core network, for example, an MB-SMF, triggers an MBS session activation procedure, a terminal device in an idle state first enters a connected state, and then receives MBS data; and a terminal device in an RRC-inactive state can receive MBS data without entering the connected state.

5. MBS session release procedure: Under specific triggering conditions, for example, when the AF instigates group dissolution, for example, when an MBS or an MBS session is dissolved or released, the AF may instigate an MBS session release procedure to release an MBS session.

In an MBS session release procedure in 3GPP R17 and R18, a core network first pages a terminal device in an idle state and a terminal device in an RRC-inactive state among terminal devices joining a multicast session to a connected state. Further, a group member in the connected state may receive control plane signaling that is sent by the core network and that instructs a related group member to leave the multicast group, for example, instructs a corresponding group member to delete MBS-related information stored in the group member to complete a subsequent MBS session release procedure.

That is, in 3GPP R17 and R18, if the core network triggers an MBS session release procedure, both a group member in an idle state and a group member in an RRC-inactive state first enter a connected state, and then continue the MBS session release procedure.

An access network device in current R17 cannot distinguish between an MBS session activation event and an MBS session release event. For the access network device, a group paging message that carries an MBS session identifier (MBS session ID) and that is sent by an AMF is received. Therefore, the access network device triggers group paging. The MBS session ID may be a temporary mobile group identity (Temporary Mobile Group Identity, TMGI) or an IP multicast address (IP multicast address).

Due to limited transmission resources of a wireless system, in most cases, a plurality of terminal devices joining an MBS session share a paging occasion (paging occasion, PO). For example, a terminal device in an idle state and a terminal device in an RRC-inactive state share a PO. In this case, if a core network element triggers an MBS session activation procedure, both the terminal device in the RRC-inactive state and the terminal device in the idle state listen and detect a group paging message, and the group paging message triggers the terminal device in the RRC-inactive state and the terminal device in the idle state to enter a connected state. Consequently, network signaling overheads are increased because the terminal device originally allowed to receive an MBS in the RRC-inactive state triggers signaling for entering the RRC-connected state, for example, RRC resume (resume procedure).

In view of this, this application provides a multicast/broadcast service communication method, to help reduce network signaling overheads.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

It may be understood that the term "A, B, or C" in this specification may represent the following seven cases: only A exists, only B exists, only C exists, only A and B exist, only A and C exist, only B and C exist, and A, B, and C exist.

The foregoing briefly describes terms used in this application, and details are not described in the following embodiments again. The following describes in detail the multicast/broadcast service communication method provided in embodiments of this application with reference to accompanying drawings. Embodiments provided in this application may be applied to the network architecture shown in FIG. 1 or FIG. 2. This is not limited.

FIG. 4 is a diagram of a multicast/broadcast service communication data transmission method 200 according to an embodiment of this application. The method 200 may include the following steps.

S210: A multicast/broadcast session management network element sends event information to a first network device.

Correspondingly, the first network device receives the event information.

The event information may be carried in a multicast/broadcast context status notify (Nmbsmf_MBSSession_ContextStatusNotify) message. The event information may alternatively be carried in a group member reachability request (Namf_MT_EnableGroupReachability Request) message. The event information may alternatively be carried in a paging message (paging message). The event information may alternatively be carried in an N2 message. The event information may alternatively be carried in a notification message (notification message).

Specifically, the event information may include at least one of the following: an event identifier (event ID), an event type (event type), a report event (report event), a context status event report (ContextStatusEventReport), a context status event type (ContextStatusEventType), status information (statusInfo), an MBS session activity status (MbsSessionActivityStatus), or a report list (report list). The event information indicates activation or release of a first multicast/broadcast session.

The event information indicates activation or release of the first multicast/broadcast session. In other words, it may be understood as one or more of the following meanings: the event information indicates activation of the first multicast/broadcast session (MBS session activation), or the event information indicates release of the first multicast/broadcast session (MBS session release).

In an example, the event information includes the event identifier (event identifier) or the event type (event type), and a different value of the event identifier or the event type indicates multicast/broadcast session activation (MBS session activation) or multicast/broadcast session release (MBS session release). For example, if the event identifier or the event type is (STATUS_INFO, ACTIVE), it indicates activation of the first multicast/broadcast session; if the event identifier or the event type is (STATUS_INFO, INACTIVE), it indicates deactivation of the first multicast/broadcast session; or if the event identifier or the event type is SESSION_RELEASE, it indicates release of the first multicast/broadcast session.

In another example, the event information may include information explicitly indicating multicast/broadcast session activation or multicast/broadcast session release. If the event information includes explicit information indicating activation of the first multicast/broadcast session, it indicates activation of the first multicast/broadcast session. For example, the explicit information may be "MBS session activation". If the event information includes explicit information indicating release of the first multicast/broadcast session, it indicates release of the first multicast/broadcast session. For example, the explicit information may be "MBS session release".

In an example, the event information may include the report list (report list), and the report list indicates one or more events that need to be reported. For example, the event to be reported may include activation of the first multicast/broadcast session (MBS session activation), or the event to be reported may include release of the first multicast/broadcast session (MBS session release), or the like. For example, if the report list includes (STATUS_INFO, ACTIVE), it indicates activation of the first multicast/broadcast session; if the report list includes (STATUS_INFO, INACTIVE), it indicates deactivation of the first multicast/broadcast session; or if the report list includes SESSION_RELEASE, it indicates release of the first multicast/broadcast session.

In an example, the event information may include the event type (event type) and the status information (status information). The event type and the status information may jointly indicate activation, deactivation, or release of the first multicast/broadcast service broadcast session. For example, if the event type is STATUS_INFO and the status information (state status information) is ACTIVE, it indicates activation of the first multicast/broadcast session; if the event type is STATUS_INFO and the status information is INACTIVE, it indicates deactivation of the first multicast/broadcast session; or if the event type is SESSION_RELEASE, it indicates release of the first multicast/broadcast session.

In an example, the event information may include the context status event report (ContextStatusEventReport), and the context status event report indicates a report event. The context status event report may include a context status event type (ContextStatusEventType), the context status event type is used to describe an MBS session context status event type, and the context status event type may include status information (STATUS_INFO). The status information may indicate a status of a current MBS session, for example, activation or deactivation of the first multicast/broadcast session. The context event type may alternatively include session release (SESSION_RELEASE). The session release may indicate MBS session release, for example, indicate release of the first multicast/broadcast session. The context status event type may alternatively include an MBS session activity status (MbsSessionActivityStatus). The MBS session activity status indicates MBS session activation or deactivation, for example, indicates activation or deactivation of the first multicast/broadcast session.

In an example, the event information may include status information (statusInfo), and the status information indicates a status of the MBS session, for example, activation of the first multicast/broadcast session, deactivation of the first multicast/broadcast session, or release of the first multicast/broadcast session. For example, if the status information (statusInfo) is (STATUS_INFO, ACTIVE), it indicates activation of the first multicast/broadcast session; if the status information (statusInfo) is (STATUS_INFO, INACTIVE), it indicates deactivation of the first multicast/broadcast session; or if the status information (statusInfo) is SESSION_RELEASE, it indicates release of the first multicast/broadcast session.

It should be understood that the event information is merely a name example of information "indicating activation or release of the first multicast/broadcast session", and it does not mean that the information "indicating activation or release of the first multicast/broadcast session" is definitely information related to an event.

S220: The first network device may send first information based on the event information.

Correspondingly, a first terminal device receives the first information.

Specifically, in step S220, the first network device sends the first information when triggered by the event information. It should be understood that, that the first network device sends the first information when triggered by the event information may be understood as: the first network device sends the first information based on the event information or after the first network device receives the event information.

Optionally, the first information may be carried in a paging message or a notification message.

The first information indicates activation or release of the first multicast/broadcast session.

In an example, the first information may be indication (indication) information.

For example, the indication information may have one bit. When a value of the indication information is 1, it indicates activation of the first multicast/broadcast session. When the value of the indication information is 0, it indicates release of the first multicast/broadcast session. Alternatively, when the value of the indication information is 0, it indicates activation of the first multicast/broadcast session; or when the value of the indication information is 1, it indicates release of the first multicast/broadcast session.

For another example, the indication information may be of an enumeration (Enumeration) type. When a value of the indication information is a specific integer, it indicates activation of the first multicast/broadcast session. When the value of the indication information is another integer, it indicates release of the first multicast/broadcast session.

For another example, the indication information may be one or more information elements (information element, IE). When the paging message or the notification message carries the one or more information elements of the indication information, it indicates activation of the first multicast/broadcast session. When the paging message or the notification message does not carry the one or more information elements of the indication information, it indicates release of the first multicast/broadcast session. Alternatively, when the paging message or the notification message carries the one or more information elements, it indicates release of the first multicast/broadcast session; or when the paging message or the notification message does not carry the one or more information elements, it indicates activation of the first multicast/broadcast session.

The one or more information elements may be an event (event) information element, a cause value (cause value), a cause (cause), or the like.

Specifically, the event information element may carry an enumerated value. For example, if the enumerated value is a specific integer, it indicates activation of the first multicast/broadcast session; or if the enumerated value is another integer, it indicates release of the first multicast/broadcast session. Alternatively, the cause value may carry a Boolean (bureau) value. For example, if the Boolean value is 1, it indicates activation of the first multicast/broadcast session; or if the Boolean value is 0, it indicates release of the first multicast/broadcast session. Alternatively, if the Boolean value is 0, it indicates activation of the first multicast/broadcast session; or if the Boolean value is 1, it indicates release of the first multicast/broadcast session. The cause value or the cause information element may carry an enumerated value. For example, if the enumerated value is a specific integer, it indicates activation of the first multicast/broadcast session; or if the enumerated value is another integer, it indicates release of the first multicast/broadcast session. For another example, the cause value or the cause may carry a Boolean value. For example, if the Boolean value is 1, it indicates activation of the first multicast/broadcast session; or if the Boolean value is 0, it indicates release of the first multicast/broadcast session. Alternatively, if the Boolean value is 0, it indicates activation of the first multicast/broadcast session; or if the Boolean value is 1, it indicates release of the first multicast/broadcast session.

In another example, the first information may alternatively be notification (notification) information.

For example, the notification information may carry an enumerated value. For example, if the enumerated value is a specific integer, it indicates activation of the first multicast/broadcast session; or if the enumerated value is another integer, it indicates release of the first multicast/broadcast session. For another example, the notification information may carry a Boolean value. For example, if the Boolean value is 1, it indicates activation of the first multicast/broadcast session; or if the Boolean value is 0, it indicates release of the first multicast/broadcast session. Alternatively, if the Boolean value is 0, it indicates activation of the first multicast/broadcast session; or if the Boolean value is 1, it indicates release of the first multicast/broadcast session.

It should be understood that, the first network device sends the first information to terminal devices that join the first multicast/broadcast session. Correspondingly, a terminal device in a radio resource control inactive state among the terminal devices that join the first multicast/broadcast session can receive the first information.

The terminal device in the radio resource control inactive state among the terminal devices that join the first multicast/broadcast session may be denoted as the first terminal device.

It should be noted that the terminal devices that join the first multicast/broadcast session may include a plurality of (two or more) terminal devices, where a terminal device in the radio resource control inactive state may be denoted as the first terminal device. The first terminal device may be one or more terminal devices. This is not limited. For example, it is assumed that there are four terminal devices joining the first multicast/broadcast session: a terminal device 1, a terminal device 2, a terminal device 3, and a terminal device 4; and in the four terminal devices, terminal devices in the radio resource control inactive state are the terminal device 1 and the terminal device 2. The first terminal device herein refers to the terminal device 1 and the terminal device 2.

The terminal device that joins (joined) the first multicast/broadcast session may also be referred to as a terminal device that is involved in (involved in) the first multicast/broadcast session, or a terminal device that has joined the first multicast/broadcast session.

The terminal device being in the radio resource control inactive state may also be referred to as a terminal device in the radio resource control inactive state (UE in RRC-inactive state).

Herein, "indicate (indicate/indication)" may be replaced with "represent (present/represent)", "express", "notify (notify/notification)", or the like.

It should be understood that in this application, meanings of a same term in the context are the same. After descriptions are given above, details are not repeated in the following descriptions.

S230: The first terminal device enters a connected state or keeps in the radio resource control inactive state based on the first information.

Specifically, in step S230, the first terminal device may enter the connected state or keep in the radio resource control inactive state when triggered by the first information.

Herein, "when triggered by the first information" may be understood as: the first terminal device receives the first information, and triggers/performs/executes/instigates an operation based on the first information.

Entering the connected state may be understood as: the first terminal device instigates a random access and an RRC connection resume (RRC-connection resume) procedure, and returns to a CM-connected with RRC-inactive state.

Alternatively, entering the connected state may be understood as: the first terminal device first returns to a CM-IDLE state, and then instigates a service request procedure to return to the CM-connected with RRC-inactive state.

In addition, entering the connected state (enter to/go to) may also be referred to as: returning to the connected state, resuming the connected state, instigating (instigate) RRC connection resume, triggering (trigger) RRC connection resume, performing (perform) RRC connection resume, instigating (instigate) service request (service request, SR), triggering (trigger) service request, performing (perform) service request, or the like.

Keeping in the radio resource control inactive state may be understood as: not performing, not instigating, not triggering, or not executing RRC connection resume; or may be understood as: neither instigating, performing, triggering, or executing random access (Random Access, RA), nor instigating, performing, triggering, or executing RRC connection/connection resume.

Alternatively, keeping in the radio resource control inactive state may be understood as: after receiving the first information, skipping performing a response operation or skipping triggering a next operation.

Alternatively, keeping in the radio resource control inactive state may be understood as: skipping entering the connected state as triggered by the first information, or skipping entering the idle state as triggered by the first information.

In addition, keeping in (keep in) the radio resource control inactive state may also be referred to as continuing to be in the radio resource control inactive state.

According to the method provided in the foregoing embodiment, after receiving the event information of the multicast/broadcast session management network element, the first network device sends the first information to the first terminal device based on the event information, and the first terminal device determines, based on the first information, to enter the connected state or keep in the radio resource control inactive state. If the first information indicates activation of the first multicast/broadcast session, the first terminal device may keep in the radio resource control inactive state, so that a terminal device that is in the radio resource control inactive state and that is allowed to receive an MBS in this state does not enter the connected state. This helps reduce network overheads.

Optionally, that the first terminal device keeps in the radio resource control inactive state based on the first information in step S230 includes at least one of the following cases.

Case 1: If the first information indicates activation of the first multicast/broadcast session, and the first terminal device supports receiving a multicast/broadcast service in the radio resource control inactive state, the first terminal device keeps in the radio resource control inactive state.

The first terminal device supports (UE support) receiving a multicast/broadcast service in the radio resource control inactive state. In other words, the first terminal device is allowed (UE allow) to receive a multicast/broadcast service in the radio resource control inactive state; or the first terminal device has a capability of receiving a multicast/broadcast service in the radio resource control inactive state; or the first terminal device is enabled (enable) to receive a multicast/broadcast service in the radio resource control inactive state; or a capability (capability) of the first terminal device supports receiving a multicast/broadcast service in the radio resource control inactive state.

In addition, receiving a multicast/broadcast service may also be referred to as receiving data of a multicast/broadcast service, receiving multicast/broadcast, receiving multicast/broadcast data, receiving multicast data, or receiving multicast.

It should be noted that in this application, a multicast/broadcast service and a multicast/broadcast session may be replaced with each other. This is not limited.

Specifically, the first terminal device may be a terminal device that supports a function related to 3GPP Release 18 (Release 18, R18), for example, a device that has a function of receiving a multicast/broadcast service in a radio resource control inactive state; or the first terminal device may be a terminal device that supports a function related to 3GPP Release 17+ (R17+).

Case 2: If the first information indicates activation of the first multicast/broadcast session, and the first terminal device is allowed to receive a first multicast/broadcast service in the radio resource control inactive state, the first terminal device keeps in the radio resource control inactive state.

The first multicast/broadcast session is used for transmitting the first multicast/broadcast service.

The first terminal device is allowed (UE(s) is/are allowed) to receive the first multicast/broadcast service in the radio resource control inactive state. In other words, the first multicast/broadcast service is allowed (allowing UE) to be received by the first terminal device in the radio resource control inactive state; or the first terminal device is enabled (UE(s) is/are enabled) to receive the first multicast/broadcast service in the radio resource control inactive state.

Specifically, the first terminal device may determine, based on at least one of second information and third information, whether the first terminal device is allowed to receive the first multicast/broadcast service in the radio resource control inactive state.

The second information indicates that the first terminal device is allowed to receive a multicast/broadcast service in the radio resource control inactive state.

In an example, the second information may be from an access network device.

Specifically, the access network device may send the second information to the first terminal device in at least one of the following manners.

Manner 1: The access network device determines, based on whether air interface resources are congested or insufficient, whether the first terminal device needs to be configured to be in a state of being allowed to receive a multicast/broadcast service in the radio resource control inactive state. For example, when the access network device finds that the air interface resources are congested or insufficient, the access network device sends the second information to the first terminal device. For another example, when a relatively large quantity of terminal devices in a cell of the access network device or in the access network device are to receive a multicast/broadcast service, the access network device sends the second information to the first terminal device.

Manner 2: The access network device has a switch for allowing a terminal device in the radio resource control inactive state to receive a multicast/broadcast service. For example, when the access network device turns on the switch (on), the access network device sends the second information to the first terminal device.

Manner 3: The access network device determines, based on a service priority (priority) of a multicast/broadcast service, whether the access network device sends the second information to the first terminal device. For example, the access network device sends the second information to the first terminal device based on a relatively high or low priority of the multicast/broadcast service.

Manner 4: The access network device determines, based on a related value of a 5G QoS identifier (5G QoS Identifier, 5QI) and/or an allocation and retention priority (Allocation and Retention Priority, ARP) included in QoS information of a multicast/broadcast service, whether to send the second information to the first terminal device. For example, when the ARP is relatively high or relatively low, the second information is sent to the first terminal device. For another example, when a value of the 5QI is a specific integer, the second information is sent to the first terminal device.

Manner 5: The access network device determines, based on whether a multicast/broadcast service itself is allowed to be received by a terminal device in the radio resource control inactive state (that is, an indication of the third information), whether to send the second information. For example, if the multicast/broadcast service is allowed to be received by a terminal device in the radio resource control inactive state, the second information is sent; or if the multicast/broadcast service is not allowed to be received by a terminal device in the radio resource control inactive state, the second information is not sent.

Manner 6: The access network device determines, based on one or more information elements in other QoS information of a multicast/broadcast service, whether to send the second information to the first terminal device. For example, the one or more information elements include a priority level (Priority Level), a reflective QoS attribute (Reflective QoS Attribute), notification control (Notification Control), a flow bit rate (Flow Bit Rate), an aggregate bit rate (Aggregate Bit Rate), a packet loss rate (Packet Loss Rate), a packet delay budget (Packet Delay Budget), a packet error rate (Packet Error Rate), an averaging window (Averaging Window), or a maximum data burst volume (Maximum Data Burst Volume).

Manner 7: The access network device determines, based on a resource type of a multicast/broadcast service, whether to send the second information to the first terminal device. For example, when the resource type (resource type) is a guaranteed bit rate (Guaranteed Bit Rate, GBR), the second information is sent to the first terminal device; or when a resource type is a non-guaranteed bit rate (Non-GBR), the second information is sent to the first terminal device.

The second information may be carried in an RRC message, or may be carried in a message transmitted on a multicast control channel (Multicast Control Channel, MCCH), or may be carried in a message transmitted on a multicast transport channel (Multicast Transport Channel, MTCH), or may be carried in a system information block (System Information Block, SIB), or may be carried in a message transmitted on a broadcast control channel (Broadcast Control Channel, BCH), or may be carried in a message transmitted on a common control channel (Common Control Channel, CCCH), or may be carried in a message transmitted on a dedicated control channel, or may be carried in a message transmitted on a dedicated traffic channel (Dedicated Traffic Channel, DTCH).

In another example, the second information may be from an access management network element or a session management network element.

For example, the session management network element may receive the second information from the multicast/broadcast session management network element, a policy control network element, a unified data management network element, a unified data repository, a multicast/broadcast service function, or a network capability exposure network element. Further, the session management network element sends the second information to the access management network element by using an N11 message. The access management network element sends the second information to the access network device by using an N2 message. The access network device sends the second information to the first terminal device by using an RRC message.

In an example, the second information may be in a bit form. When a value of the second information is 1, it indicates that the first terminal device is allowed to receive a multicast/broadcast service in the radio resource control inactive state. When the value of the second information is 0, it indicates that the first terminal device is not allowed to receive a multicast/broadcast service in the radio resource control inactive state. Alternatively, when the value is 0, it indicates that the first terminal device is allowed to receive a multicast/broadcast service in the radio resource control inactive state; or when the value is 1, it indicates that the first terminal device is not allowed to receive a multicast/broadcast service in the radio resource control inactive state.

In another example, the second information may be of an enumeration (Enumeration) type. When a value of the second information is a specific integer, it indicates that the first terminal device is allowed to receive a multicast/broadcast service in the radio resource control inactive state. When the value of the second information is another integer, it indicates that the first terminal device is not allowed to receive a multicast/broadcast service in the radio resource control inactive state.

In another example, the second information may be one or more information elements (information element, IE). When the one or more information elements appear, it indicates that the first terminal device is allowed to receive a multicast/broadcast service in the radio resource control inactive state. When the one or more information elements do not appear, it indicates that the first terminal device is not allowed to receive a multicast/broadcast service in the radio resource control inactive state. Alternatively, when the one or more information elements appear, it indicates that the first terminal device is not allowed to receive a multicast/broadcast service in the radio resource control inactive state; or when the one or more information elements do not appear, it indicates that the first terminal device is allowed to receive a multicast/broadcast service in the radio resource control inactive state.

The third information indicates that the first multicast/broadcast service is allowed to be received by a terminal device in the radio resource control inactive state.

In an example, the third information may be a service priority (priority) of a multicast/broadcast service. For example, the third information indicates, based on a relatively high or low priority of the multicast/broadcast service, that the first multicast/broadcast service is allowed to be received by a terminal device in the radio resource control inactive state.

In another example, the third information may be a related value of a 5G QoS identifier (5G QoS Identifier, 5QI) and/or an allocation and retention priority (Allocation and Retention Priority, ARP) included in QoS information of a multicast/broadcast service. For example, when the ARP is relatively high or low, it indicates that the first multicast/broadcast service is allowed to be received by a terminal device in the radio resource control inactive state; or when the value of the 5QI is a specific integer, it indicates that the first multicast/broadcast service is allowed to be received by a terminal device in the radio resource control inactive state.

In another example, the third information may be information that explicitly indicates whether the multicast/broadcast service itself is allowed to be received by a terminal device in the radio resource control inactive state. For example, if there is an explicit indication, the first multicast/broadcast service is allowed to be received by a terminal device in the radio resource control inactive state; or if there is no explicit indication, the first multicast/broadcast service is not allowed to be received by a terminal device in the radio resource control inactive state.

In another example, the third information may be one or more information elements in other QoS information of a multicast/broadcast service, and gives an implicit indication based on the one or more information elements. For example, the one or more information elements may be a priority level (Priority Level), a reflective QoS attribute (Reflective QoS Attribute), notification control (Notification Control), a flow bit rate (Flow Bit Rate), an aggregate bit rate (Aggregate Bit Rate), a packet loss rate (Packet Loss Rate), a packet delay budget (Packet Delay Budget), a packet error rate (Packet Error Rate), an averaging window (Averaging Window), or a maximum data burst volume (Maximum Data Burst Volume).

In another example, the third information may be a resource type of a multicast/broadcast service. For example, when the resource type (resource type) is a guaranteed bit rate (Guaranteed Bit Rate, GBR), it indicates that the first multicast/broadcast service is allowed to be received by a terminal device in the radio resource control inactive state; or when the resource type is a non-guaranteed bit rate (Non-GBR), it indicates that the first multicast/broadcast service is allowed to be received by a terminal device in the radio resource control inactive state.

In another example, the third information may be in a bit form. When a value of the third information is 1, it indicates that the first multicast/broadcast service is allowed to be received by a terminal device in the radio resource control inactive state. When the value of the third information is 0, it indicates that the first multicast/broadcast service is not allowed to be received by a terminal device in the radio resource control inactive state. Alternatively, when the value is 0, it indicates that the first multicast/broadcast service is allowed to be received by a terminal device in the radio resource control inactive state; or when the value is 1, it indicates that the first multicast/broadcast service is not allowed to be received by a terminal device in the radio resource control inactive state.

In another example, the third information may be of an enumeration (Enumeration) type. When a value of the third information is a specific integer, it indicates that the first multicast/broadcast service is allowed to be received by a terminal device in the radio resource control inactive state. When the value of the third information is another integer, it indicates that the first multicast/broadcast service is not allowed to be received by a terminal device in the radio resource control inactive state.

In another example, the third information may be one or more information elements (information element, IE). When the one or more information elements appear, it indicates that the first multicast/broadcast service is allowed to be received by a terminal device in the radio resource control inactive state. When the one or more information elements do not appear, it indicates that the first multicast/broadcast service is not allowed to be received by a terminal device in the radio resource control inactive state. Alternatively, when the one or more information elements appear, it indicates that the first multicast/broadcast service is not allowed to be received by a terminal device in the radio resource control inactive state; or when the one or more information elements do not appear, it indicates that the first multicast/broadcast service is allowed to be received by a terminal device in the radio resource control inactive state.

The third information may be from the access network device, the access management network element, or the session management network element.

For example, the third information may be carried in an RRC message, or may be carried in a message transmitted on a multicast control channel (Multicast Control Channel, MCCH), or may be carried in a message transmitted on a multicast transport channel (Multicast Transport Channel, MTCH), or may be carried in a system information block (System Information Block, SIB), or may be carried in a message transmitted on a broadcast control channel (Broadcast Control Channel, BCH), or may be carried in a message transmitted on a common control channel (Common Control Channel, CCCH), or may be carried in a message transmitted on a dedicated control channel, or may be carried in a message transmitted on a dedicated traffic channel (Dedicated Traffic Channel, DTCH), or may be carried in an N2 message, or may be carried in a message exchanged between the access management network element and the access network device, or may be carried in a message exchanged between the session management network element and the access management network element, or may be carried in a message exchanged between the multicast/broadcast session management function network element and the session management function network element.

It should be understood that the second information and the third information may be the same. For example, both the second information and the third information are explicit or implicit indications of whether receiving a multicast/broadcast service in the radio resource control inactive state is allowed. For example, the explicit indication may be the foregoing manner of using a bit. The implicit indication may be the foregoing resource type. The explicit or implicit indication may indicate that the first terminal device is allowed to receive a multicast/broadcast service in the radio resource control inactive state, and may indicate that the first multicast/broadcast service is allowed to be received by a terminal device in the radio resource control inactive state.

The second information may be from the access network device, the access management network element, the session management network element, the multicast/broadcast session management network element, or an application network element.

For example, the second information is an explicit indication, for example, a bit or an enumerated value, indicating whether a terminal device in the radio resource control inactive state is allowed to receive a multicast/broadcast service. The second information is generated by the access network device, and is sent by the access network device to the first terminal device.

The third information may be from the access network device, the access management network element, the session management network element, the multicast/broadcast session management network element, or the application network element.

For example, the third information is a multicast/broadcast service resource type. The third information is generated by the multicast/broadcast session management network element or the session management network element, and is sent by the access management network element to the first terminal device through the access network device.

That the first terminal device determines, based on at least one of the second information and the third information, whether the first terminal device is allowed to receive the first multicast/broadcast service in the radio resource control inactive state specifically includes: if the first terminal device receives the second information or the third information in any one of an RRC message, a message sent on a multicast control channel MCCH, a SIB message, a paging message, or an air interface notification message, determining that the first terminal device is allowed to receive the first multicast/broadcast service in the radio resource control inactive state; or if the first terminal device receives neither the second information nor the third information in any one of the RRC message, the message sent on the multicast control channel MCCH, the SIB message, the paging message, and the air interface notification message, determining that the first terminal device is not allowed to receive the first multicast/broadcast service in the radio resource control inactive state.

Case 3: If the first information indicates activation of the first multicast/broadcast session, the first terminal device supports receiving a multicast/broadcast service in the radio resource control inactive state, and the first terminal device is allowed to receive the first multicast/broadcast service in the radio resource control inactive state, the first terminal device keeps in the radio resource control inactive state.

For a specific meaning of the first terminal device supporting receiving a multicast/broadcast service in the radio resource control inactive state, refer to the description in the foregoing Case 1. For a specific meaning of the first terminal device being allowed to receive the first multicast/broadcast service in the radio resource control inactive state, refer to the description in the foregoing Case 2. Details are not described herein again.

The first terminal device keeps in the radio resource control inactive state when the first terminal device supports receiving a multicast/broadcast service in the radio resource control inactive state, and the first terminal device is allowed to receive the first multicast/broadcast service in the radio resource control inactive state.

Optionally, in an implementation scenario of the foregoing embodiment, after the first terminal device keeps in the radio resource control inactive state, the method 200 further includes: the first terminal device receives the first multicast/broadcast service by using the first multicast/broadcast session.

Optionally, that the first terminal device enters the connected state based on the first information in step S230 includes at least one of the following cases.

Case 1: If the first information indicates activation of the first multicast/broadcast session, and the first terminal device does not support receiving a multicast/broadcast service in the radio resource control inactive state, the first terminal device enters the connected state.

The first terminal device does not support (does not supports/non RRC-inactive reception supporting/non-supporting) receiving a multicast/broadcast service in the radio resource control inactive state. In other words, the first terminal device is not allowed (does UE not allows) to receive a multicast/broadcast service in the radio resource control inactive state. In other words, the first terminal device is not enabled (not enable) to receive a multicast/broadcast service in the radio resource control inactive state. In other words, the first terminal device does not have a capability of receiving a multicast/broadcast service in the radio resource control inactive state.

Specifically, the first terminal device may be a terminal device with a related function in 3GPP R17 and a previous release earlier than R17, for example, a device that does not have a function of receiving a multicast/broadcast service in the radio resource control inactive state.

Case 2: If the first information indicates activation of the first multicast/broadcast session, and the first terminal device is not allowed to receive the first multicast/broadcast service in the radio resource control inactive state, the first terminal device enters the connected state.

The first multicast/broadcast session is used for transmitting the first multicast/broadcast service.

The first terminal device is not allowed (UE(s) is/are not allowed) to receive the first multicast/broadcast service in the radio resource control inactive state. In other words, the first multicast/broadcast service is not allowed (not allowing UE) to be received by the first terminal device in the radio resource control inactive state. In other words, the first terminal device is not enabled (UE(s) is/are not enabled) to receive the first multicast/broadcast service in the radio resource control inactive state.

Specifically, the first terminal device may determine, based on at least one of the second information and the third information, whether the first terminal device is allowed to receive the first multicast/broadcast service in the radio resource control inactive state. For a specific determining manner, refer to the method 200. Details are not described herein again.

Case 3: If the first information indicates release of the first multicast/broadcast session, the first terminal device enters the connected state.

When the first information indicates release of the first multicast/broadcast session, the first terminal device enters the connected state.

Optionally, in an implementation scenario of the foregoing embodiment, the method 200 further includes: the first terminal device sends fourth information to a first network element.

The fourth information indicates whether the first terminal device supports receiving a multicast/broadcast service in the radio resource control inactive state.

Specifically, the fourth information indicates whether the first terminal device supports receiving a multicast/broadcast service in the radio resource control inactive state. In other words, the fourth information indicates that the first terminal device supports receiving a multicast/broadcast service in the radio resource control inactive state; and/or the fourth information indicates that the first terminal device does not support receiving a multicast/broadcast service in the radio resource control inactive state.

Specifically, the first network element may be the access network device, the access management network element, the session management network element, or the application network element.

In an example, the first network element is the access network device.

Specifically, the first terminal device may send an RRC message to the access network device in a registration process, and the RRC message may carry the fourth information.

In another example, the first network element is the access management network element.

Specifically, the first terminal device may send a non-access stratum (Non-Access Stratum, NAS) message to the access management network element in a registration process or a service request process, where the NAS message may carry the fourth information.

For example, the first terminal device may use a registration request (Registration Request) message to carry the fourth information. The first terminal device may alternatively use a service request (Service Request) message to carry the fourth information. The first terminal device may alternatively use an uplink non-access stratum transport (UL NAS transport) message to carry the fourth information. The first terminal device may alternatively use an authentication response (authentication response) message to carry the fourth information. The first terminal device may alternatively use a registration complete (registration complete) message to carry the fourth information. The first terminal device may alternatively use a configuration update complete (configuration update complete) message to carry the fourth information. The first terminal device may alternatively use an identify response (Identify Response) message to carry the fourth information. The first terminal device may alternatively use a notification response (notification response) message to carry the fourth information. The first terminal device may alternatively use a security mode complete (security mode complete) message to carry the fourth information.

In another example, the first network element is the session management network element.

Specifically, for example, the first terminal device may send a non-access stratum (non-access stratum, NAS) N1 session management (Session Management, SM) message to the session management network element in a related management process of a PDU session. The NASN1 SM message may carry the fourth information. For example, the NASN1 SM message may be a protocol data unit (protocol data unit, PDU) session modification request message, a PDU session establishment request message, a PDU session authentication complete (PDU session authentication complete) message, or a PDU session modification complete (PDU session modification complete) message.

In another example, the first network element is the application network element.

Specifically, the first terminal device may send uplink data to the application network element in a process of interacting with the application network element, where a packet header of the uplink data may carry the fourth information. For example, the fourth information may be carried in a hypertext transfer protocol (hypertext transfer protocol, http) data packet.

It should be understood that, in a registration process, one or more terminal devices registered with a network may send fourth information to the first network element, where the one or more terminal devices registered with the network include the first terminal device.

In the foregoing description, that the first terminal device sends the fourth information to the first network element is used as an example. For another terminal device in the terminal devices that need to be registered other than the first terminal device, a manner of reporting fourth information to the first network element in a registration process is similar to the manner in which the first terminal device reports the fourth information to the first network element in a registration process. Details are not described herein again.

It should be understood that, in a service request process, each terminal device that joins the first multicast/broadcast session may send fourth information to the first network element, where the terminal devices that join the first multicast/broadcast session include the first terminal device.

The terminal devices that join the first multicast/broadcast session are third terminal devices.

It should be noted that there may be a plurality of (two or more) terminal devices joining the first multicast/broadcast session. The plurality of terminal devices may be denoted as the third terminal devices, and the third terminal devices may be two or more terminal devices. This is not limited. For example, it is assumed that there are four terminal devices that join the first multicast/broadcast session: a terminal device 1, a terminal device 2, a terminal device 3, and a terminal device 4. The third terminal devices herein refer to the terminal device 1, the terminal device 2, the terminal device 3, and the terminal device 4.

In other words, the third terminal devices include the first terminal device.

The foregoing uses an example in which the first terminal device sends the fourth information to the first network element as an example for description. For another terminal device in the third terminal devices other than the first terminal device, a manner of reporting fourth information to the first network element in a service request procedure is similar to the manner in which the first terminal device reports the fourth information to the first network element in a service request procedure. Details are not described herein again.

Specifically, in the service request procedure, the third terminal device may send the fourth information to the first network element when sending a join request message.

The join request message is used for requesting to join the first multicast/broadcast session. The join request message is used for requesting to join the first multicast/broadcast session. In other words, the join request message is used for requesting to join the first multicast/broadcast service corresponding to the first multicast/broadcast session, or the join request message is used for requesting to join a multicast group corresponding to the multicast session. Specifically, the join request message may include an identifier of the first multicast/broadcast session.

Optionally, in any implementation scenario of the foregoing embodiment, the first terminal device is located in a service area of the first multicast/broadcast session.

Specifically, the service area of the first multicast/broadcast session refers to a service provisioning area (service area) of the first multicast/broadcast session. The service area may include one or more cell identities (cell ID list). Alternatively, the service area may include one or more tracking area identifiers (Tracking Area ID, TAI list). Alternatively, the service area may include one or more frequency selection areas (Frequency Selection Area).

When the first terminal device is located in the service area of the first multicast/broadcast session, the terminal device enters the connected state or keeps in the radio resource control inactive state.

Optionally, in an implementation scenario of the foregoing embodiment, the first network device in steps S210 and S220 is the session management network element.

In this implementation scenario, step S210 includes: the multicast/broadcast session management network element sends the event information to the session management network element.

Specifically, the session management network element may receive a multicast/broadcast context status notify (Nmbsmf_MBSSession_ContextStatusNotify) message from the session management function network element, and the multicast/broadcast context notify message may include the event information.

In this implementation scenario, step S220 includes: the session management network element may generate the first information based on the event information, and the session management network element sends the first information to the first terminal device.

For specific descriptions of the event information and the first information, refer to steps S210 and S220.

That the session management network element generates the first information based on the event information may include at least one of the following cases.

Case 1: The event information indicates multicast/broadcast session activation, and the session management network element generates the first information based on the event information.

Case 2: The event information indicates multicast/broadcast session activation, receiving an MBS in the RRC inactive state is allowed/enabled/supported at the network (If the RRC-inactive state MBS receiving function is enabled/allowed/supported at the network), and the session management network element generates the first information based on the event information.

Case 3: The event information indicates multicast/broadcast session activation or multicast/broadcast session release, and the session management network element generates the first information based on the event information.

Case 4: The event information indicates multicast/broadcast session activation or multicast/broadcast session release, receiving an MBS in the RRC inactive state is allowed or enabled at the network, and the session management network element generates the first information based on the event information.

Case 5: The event information indicates multicast/broadcast session release, and the session management network element generates the first information based on the event information.

Case 6: The event information indicates multicast/broadcast session release, receiving an MBS in the RRC-inactive state is allowed or enabled at the network, and the session management network element generates the first information based on the event information.

It should be noted that step 220 may be further understood as: the session management network element generates the first information based on the multicast/broadcast context status notify message, that is, may generate the first information based on the received message.

That the session management network element sends the first information to the first terminal device includes: the session management network element sends the first information to the access management network element, the access management network element sends the first information to the access network device, and the access network device sends the first information to the first terminal device.

Specifically, the session management network element may send the first information to the access management network element by using an N11 message. For example, the N11 message may be a first message, and the first message is used for requesting reachability of the terminal device. Further, the access management network element may send the first information to the access network device by using an N2 message. The N2 message may be a second message, and the second message is used for paging or notification. Further, the access network device sends the first information to the first terminal device by using a third message. The third message may be used for paging, or the third message is used for notifying the first terminal device, and the third message includes the identifier of the first multicast/broadcast session.

For example, the first message may be a group member reachability request (Namf_MT_EnableGroupReachability request) message.

For example, the second message may be a paging message (paging message) or a notification message (notification message), and the paging message may be a group paging (group paging) message or a multicast group paging (multicast group paging) message.

For example, the third message may be a paging message (paging message) or a notification message (notification message).

According to the method provided in the foregoing implementation scenario, the session management network element may generate the first information based on the received event information, and send the first information to the first terminal device. According to the method, the first terminal device can determine to enter the connected state or keep in the radio resource control inactive state, thereby helping reduce network overheads.

Optionally, in this implementation scenario, the method further includes: the session management network element obtains the second information and/or the third information.

The second information indicates that the first terminal device is allowed to receive a multicast/broadcast service in the radio resource control inactive state, and the third information indicates that the first multicast/broadcast service is allowed to be received by a terminal device in the radio resource control inactive state.

For specific descriptions of the second information and the third information, refer to the foregoing descriptions. Details are not described herein again.

In an example, that the session management network element obtains the second information and/or the third information includes: the session management network element receives the second information and/or the third information from the multicast/broadcast session management network element, the policy control network element, the unified data management network element, the unified data repository, the multicast/broadcast service function, or the network capability exposure network element.

Specifically, the session management network element may receive a multicast/broadcast session context status subscribe response/notify (Nmbsmf_MBSSession_ContextStatusSubscribe response/notify) message from the multicast/broadcast session management network element in a procedure of extracting information related to the multicast/broadcast service, and the multicast/broadcast session context status subscribe response/notify message includes the second information and/or the third information. Alternatively, the session management network element may receive a policy control create (Npcf_MBSPolicyControl_Create) message, a policy control update (Npcf_MBSPolicyControl_UpdateNotify) message, a policy authorization create (Npcf_MBSPolicy Authorization_Create) message, or a policy authorization update (Npcf_MBSPolicy Authorization_Update) message from the policy control network element in a multicast/broadcast session policy create or modify procedure. The policy control create message, the policy control update message, the policy authorization create message, or the policy authorization update message includes the second information and/or the third information. Alternatively, the session management network element may receive a multicast/broadcast session create (Nmbsmf_MBSSession_Create) message or a multicast/broadcast session update (Nmbsmf_MBSSession_Update) message from a multicast/broadcast service function network element or the network capability exposure network element in a session update or create procedure. The multicast/broadcast session create message or the multicast/broadcast session update message includes the second information and/or the third information. Alternatively, the session management network element may receive a subscription information get (Nudm_UECM_Get/ Nudm_SDM_Get) message, a subscription information notification (Nudm_SDM_Notification/Nudm_SDM_Info) message, a parameter provision (Nudm_ParameterProvision) message, or a service specific authorization (Nudm_ServiceSpecificAuthorization) message. The subscription information get message, the subscription information notification message, the parameter provision message, or the service specific authorization message includes the second information and/or the third information.

In another example, that the session management network element obtains the second information and/or the third information includes: the session management network element generates the second information and/or the third information.

Specifically, for example, an operator may preconfigure information about the multicast/broadcast service in the session management network element, and the session management network element may read the preconfigured information to obtain the second information and/or the third information.

Optionally, in this implementation scenario, the method further includes: the session management network element sends the second information and/or the third information to the access management network element or the access network device.

Specifically, the session management network element may send the second information and/or the third information to the access management network element by using an N11 message. The N11 message may include a message sent by the session management network element to the access management network element. For example, the N11 message may be a PDU session context update (Nsmf_PDUSession_UpdateSMContext) message, a multicast/broadcast session context status update (Nmbsmf_MBSSession_ContextUpdate) message, a multicast/broadcast service N2 message transfer request (Namf_MBSCommunication_N2MessageTransfer Request) message, or the like.

Specifically, the session management network element may send the second information and/or the third information to the access network device by using an N2 message.

Optionally, in this implementation scenario, the method further includes: the session management network element receives the fourth information.

The fourth information indicates whether the first terminal device supports receiving a multicast/broadcast service in the radio resource control inactive state.

For specific descriptions of the fourth information, refer to the foregoing descriptions. Details are not described herein again.

In an example, that the session management network element receives the fourth information includes: the session management network element receives the fourth information from a terminal device.

The terminal device may be a terminal device registered with the network, or may be the third terminal device.

Specifically, for a specific process in which the session management network element receives the fourth information from the terminal device, refer to the foregoing case in which the first terminal device sends the fourth information to the first network element and the first network element is the session management network element. For example, the terminal device may send the fourth information to the session management network element by using a PDU session modification request message or a PDU session establishment request message in a PDU session modification or PDU session establishment procedure.

In another example, that the session management network element receives the fourth information includes: the session management network element receives the fourth information from the multicast/broadcast session management network element or the access management network element.

Specifically, for example, the session management network element may receive a multicast/broadcast session context status definition response (Nmbsmf_MBSSession_ContextStatus) message from the multicast/broadcast session management network element in a multicast/broadcast session establishment procedure, where the multicast/broadcast session context status definition response message includes the fourth information. For another example, the session management network element may receive a PDU session create context (Nsmf_PDUSession_CreateSMContext) message or a PDU session update context (Nsmf_PDUSession_UpdateSMContext) message from the access management network element in a PDU session establishment procedure or a multicast/broadcast session join procedure. The PDU session establishment context message or the PDU session update context message includes the fourth information.

Optionally, in another implementation scenario of the foregoing embodiment, the first network device in steps S210 and S220 is the access management network element.

In this implementation scenario, step S210 includes: the multicast/broadcast session management network element sends the event information to the session management network element, and the session management network element sends the event information to the access management network element.

Specifically, the session management network element may receive a multicast/broadcast context status notify (Nmbsmf_MBSSession_ContextStatusNotify) message from the session management function network element, and the multicast/broadcast context notify message includes the event information. Further, the session management network element may send the event information to the access management network element by using an N11 message. For example, the N11 message is a first message, and the first message is used for requesting reachability of the terminal device.

For example, the first message is a group member reachability request (Namf_MT_EnableGroupReachability request) message.

In this implementation scenario, step S220 includes: the access management network element generates the first information based on the event information, and the access management network element sends the first information to the first terminal device.

For specific descriptions of the event information and the first information, refer to steps S210 and S220.

That the access management network element generates the first information based on the event information includes at least one of the following cases.

Case 1: The event information indicates multicast/broadcast session activation, and the access management network element generates the first information based on the event information.

Case 2: The event information indicates multicast/broadcast session activation, receiving an MBS in the RRC inactive state is allowed/enabled/supported at the network (If the RRC-inactive state MBS receiving function is enabled/allowed/supported at the network), and the access management network element generates the first information based on the event information.

Case 3: The event information indicates multicast/broadcast session activation or multicast/broadcast session release, and the access management network element generates the first information based on the event information.

Case 4: The event information indicates multicast/broadcast session activation or multicast/broadcast session release, receiving an MBS in the RRC inactive state is allowed or enabled at the network, and the access management network element generates the first information based on the event information.

Case 5: The event information indicates multicast/broadcast session release, and the access management network element generates the first information based on the event information.

Case 6: The event information indicates multicast/broadcast session release, receiving an MBS in the RRC inactive state is allowed or enabled at the network, and the access management network element generates the first information based on the event information.

It should be noted that step 220 may also be understood as: the access management network element generates the first information based on the first message, that is, may generate the first information based on the received message.

That the access management network element sends the first information to the first terminal device includes: the access management network element sends the first information to the access network device, and the access network device sends the first information to the first terminal device.

Specifically, the access management network element may send the first information to the access network device by using an N2 message, where the N2 message may be a second message, and the second message is used for paging. Further, the access network device sends the first information to the first terminal device by using a third message, where the third message is used for paging, and the third message includes the identifier of the first multicast/broadcast session.

For example, the second message is a paging message (paging message). The paging message may be one of messages sent by the access management network element to the access network device. For example, the paging message is a group paging (group paging) message or a multicast group paging (multicast group paging) message.

For example, the third message is a paging message (paging message), for example, may be a paging message on a paging channel, and the paging message may be one of messages sent by the access network device to the terminal device.

According to the method provided in the foregoing implementation scenario, the session management network element may send the received event information to the access management network element, and the access management network element may generate the first information based on the event information, and send the first information to the first terminal device. According to the method, the first terminal device can determine to enter the connected state or keep in the radio resource control inactive state, thereby helping reduce network overheads.

Optionally, in this implementation scenario, the method further includes: the access management network element receives the second information and/or the third information.

The second information indicates that the first terminal device is allowed to receive a multicast/broadcast service in the radio resource control inactive state, and the third information indicates that the first multicast/broadcast service is allowed to be received by a terminal device in the radio resource control inactive state.

For specific descriptions of the second information and the third information, refer to the foregoing descriptions.

In an example, the second information and/or the third information may be from the session management network element.

For example, the session management network element may send the second information and/or the third information to the access management network element by using an N11 message.

Optionally, in this implementation scenario, the method further includes: the access management network element sends the second information and/or the third information to the access network device.

Specifically, the access management network element may use an N2 message to carry the second information and/or the third information, to send the second information and/or the third information to the access network device.

Optionally, in this implementation scenario, the method further includes: the access management network element obtains the fourth information.

The fourth information indicates whether the first terminal device supports receiving a multicast/broadcast service in the radio resource control inactive state.

For specific descriptions of the fourth information, refer to the foregoing descriptions. Details are not described herein again.

In an example, that the access management network element obtains the fourth information includes: the access management network element receives the fourth information from a terminal device.

The terminal device may be a terminal device registered with the network, or may be the third terminal device.

Specifically, for a specific process in which the access management network element receives the fourth information from the terminal device, refer to the foregoing case in which the first terminal device sends the fourth information to the first network element and the first network element is the access management network element. Details are not described herein again.

In another example, that the access management network element obtains the fourth information includes: the access management network element receives the fourth information from the unified data management network element.

For example, the access management network element receives a subscription information get (Nudm_UECM_Get/Nudm_SDM_Get) message, a subscription information notification (Nudm_SDM_Notification/Nudm_SDM_Info) message, a parameter provision (Nudm_ParameterProvision) message, or a service specific authorization (Nudm_ServiceSpecificAuthorization) message from the unified data management network element. The subscription information get message, the subscription information notification message, the parameter provision message, or the service specific authorization message includes the fourth information.

In another example, that the access management network element obtains the fourth information includes: the access management network element determines the fourth information.

Specifically, for example, the operator may preconfigure the fourth information related to the terminal device in the access management network element, and the access management network element may read the preconfigured information to obtain the fourth information.

Optionally, in this implementation scenario, the method further includes: the access management network element determines, based on the fourth information, whether the terminal device supports receiving a multicast/broadcast service in the radio resource control inactive state.

Optionally, in this implementation scenario, the method further includes: the access management network element sends the fourth information to the access network device.

Specifically, the access management network element may send the fourth information to the access network device. For example, the access management network element may use an initial context setup request (Initial Context Setup request) to carry the fourth information and send the fourth information to the access network device. Alternatively, the access management network element may use a terminal context modification request (UE context modification request) to carry the fourth information and send the fourth information to the access network device. Alternatively, the access management network element may use a connection establishment indication (Connection Establishment Indication) message to carry the fourth information and send the fourth information to the access network device. Alternatively, the access management network element may use an access and mobility management network element control plane relocation indication (AMF CP Relocation Indication) message to carry the fourth information and send the fourth information to the access network device. Alternatively, the access management network element may use a terminal information transfer (UE information transfer) message to carry the fourth information and send the fourth information to the access network device.

Optionally, in still another implementation scenario of the foregoing embodiment, the first network device in steps S210 and S220 is the access network device.

In this implementation scenario, step S210 includes: the multicast/broadcast session management network element sends the event information to the session management network element, the session management network element sends the event information to the access management network element, and the access management network element sends the event information to the access network device.

Specifically, the session management network element may receive a multicast/broadcast context status notify (Nmbsmf_MBSSession_ContextStatusNotify) message from the session management function network element, and the multicast/broadcast context notify message includes the event information. Further, the session management network element may send the event information to the access management network element by using an N11 message. For example, the N11 message is a first message, and the first message is used for requesting reachability of the terminal device. Further, the access management network element may send the event information to the access network device by using an N2 message. The N2 message may be a second message, and the second message is used for paging or notification.

For example, the first message is a group member reachability request (Namf_MT_EnableGroupReachability request) message.

For example, the second message is a paging message (paging message) or a notification message (notification message), and the paging message may be a group paging (group paging) message or a multicast group paging (multicast group paging) message.

In this implementation scenario, step S220 includes: the access network device generates the first information based on the event information, and the access network device sends the first information to the first terminal device.

For specific descriptions of the event information and the first information, refer to steps S210 and S220.

That the access network device generates the first information based on the event information includes at least one of the following cases.

Case 1: The event information indicates multicast/broadcast session activation, and the access network device generates the first information based on the event information.

Case 2: The event information indicates multicast/broadcast session activation, receiving an MBS in the RRC inactive state is allowed/enabled/supported at the network (If the RRC-inactive state MBS receiving function is enabled/allowed/supported at the network), and the access network device generates the first information based on the event information.

Case 3: The event information indicates multicast/broadcast session activation or multicast/broadcast session release, and the access network device generates the first information based on the event information.

Case 4: The event information indicates multicast/broadcast session activation or multicast/broadcast session release, receiving an MBS in the RRC inactive state is allowed or enabled at the network, and the access network device generates the first information based on the event information.

Case 5: The event information indicates multicast/broadcast session release, and the access network device generates the first information based on the event information.

Case 6: The event information indicates multicast/broadcast session release, receiving an MBS in the RRC inactive state is allowed or enabled at the network, and the access network device generates the first information based on the event information.

Case 7: The event information indicates multicast/broadcast session activation or release, the access network device starts/enables a feature or function of receiving an MBS in the RRC inactive state, and the access network device generates the first information.

It should be noted that step 220 may also be understood as: the access network device may generate the first information based on the second message, that is, may generate the first information based on the received second message.

The access network device sends the first information to the first terminal device. Specifically, the access network device may send the first information to the first terminal device by using a third message. The third message is used for paging or notification, and the third message includes the identifier of the first multicast/broadcast session.

For example, the third message is a paging message (paging message) or a notification message (notification message).

According to the method provided in the foregoing implementation scenario, the session management network element may send the received event information to the access management network element, the access management network element may further send the event information to the access network device, and the access network device may generate the first information based on the event information, and send the first information to the first terminal device. According to the method, the first terminal device can determine to enter the connected state or keep in the radio resource control inactive state, thereby helping reduce network overheads.

Optionally, in this implementation scenario, the method further includes: the access network device receives the second information and/or the third information.

The second information indicates that the first terminal device is allowed to receive a multicast/broadcast service in the radio resource control inactive state, and the third information indicates that the first multicast/broadcast service is allowed to be received by a terminal device in the radio resource control inactive state.

For specific descriptions of the second information and the third information, refer to the foregoing descriptions.

In an example, the second information and/or the third information may be from the access management network element.

For example, the access management network element may send the second information and/or the third information to the access network device by using an N2 message.

Optionally, in this implementation scenario, the method further includes: the access network device sends the second information and/or the third information to the first terminal device.

Specifically, the access network device may use an RRC message, a message transmitted on a multicast control channel (Multicast Control Channel, MCCH), a message transmitted on a multicast transport channel (Multicast Transport Channel, MTCH), a system information block (System Information Block, SIB), a message transmitted on a broadcast control channel (Broadcast Control Channel, BCH), a message transmitted on a common control channel (Common Control Channel, CCCH), a message transmitted on a dedicated control channel, or a message transmitted on a dedicated traffic channel (Dedicated Traffic Channel, DTCH) to carry the second information and/or the third information, to send the second information and/or the third information to the first terminal device.

The second information and/or the third information may be used by the first terminal device to determine whether the first terminal device is allowed to receive the first multicast/broadcast service in the radio resource control inactive state.

Optionally, in this implementation scenario, the method further includes: the access network device receives the fourth information.

The fourth information indicates whether the first terminal device supports receiving a multicast/broadcast service in the radio resource control inactive state.

For specific descriptions of the fourth information, refer to the foregoing descriptions. Details are not described herein again.

In an example, that the access network device receives the fourth information includes: the access network device receives the fourth information from a terminal device.

The terminal device may be a terminal device registered with the network, or may be the third terminal device.

Specifically, for a specific process in which the access management network element receives the fourth information from the terminal device, refer to the foregoing case in which the first terminal device sends the fourth information to the first network element and the first network element is the access network device. For example, the terminal device may send the fourth information to the access network device by using an RRC message in a procedure of interaction with the access network device.

In another example, that the access management network element receives the fourth information includes: the access network device receives the fourth information from the access management network element.

Specifically, refer to the foregoing description of sending, by the access management network element, the fourth information to the access network device. Details are not described herein again.

In any implementation scenario of the foregoing embodiment, the method further includes: the multicast/broadcast session management network element sends the identifier of the first multicast/broadcast session to the first network device, and the first network device sends the identifier of the first multicast/broadcast session to the first terminal device.

The first multicast/broadcast session is used for transmitting the first multicast/broadcast service.

The identifier (identifier, ID) of the first multicast/broadcast session may also be referred to as a first multicast/broadcast session identifier (MBS session ID), an identifier of the first multicast/broadcast service, or a multicast session identifier. The identifier of the first multicast/broadcast session is, for example, one or more of the following: a service identifier of the first multicast/broadcast service, a name of the first multicast/broadcast service, a multicast/broadcast address of the first multicast/broadcast service, a multicast/broadcast IP address of the first multicast/broadcast service, an IP multicast address (IP Multicast address) of the first multicast/broadcast service, a temporary mobile group identity (temporary mobile group identity, TMGI) corresponding to the first multicast/broadcast service, a session address of the first multicast/broadcast service, an identifier of a multicast group, or the like.

Specifically, the multicast/broadcast session management network element may send the identifier of the first multicast/broadcast session to the first network device when performing S210, and the first network device may send the identifier of the first multicast/broadcast session to the first terminal device when performing S220.

In other words, when the multicast/broadcast session management network element sends the identifier of the first multicast/broadcast session to the first network device, the identifier of the first multicast/broadcast session and the event information may be sent in a same message. When the first network device sends the identifier of the first multicast/broadcast session to the first terminal device, the identifier of the first multicast/broadcast session and the first information may be sent in a same message.

Specifically, when the first network device is separately the session management function network element, the access management network element, and the access network device, the identifier of the first multicast/broadcast session may be carried in the multicast/broadcast context notify message, the first message, the second message, and the third message.

It should be noted that the implementation scenarios of the embodiment shown in FIG. 4 may be combined with each other. This is not limited.

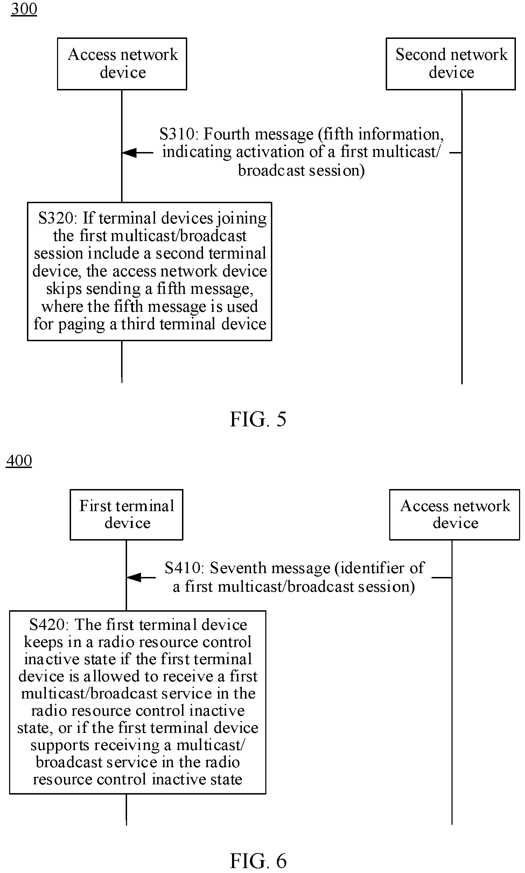

FIG. 5 is a diagram of a multicast/broadcast service communication method 300 according to an embodiment of this application. The method 300 may include the following steps.

S310: A second network device sends a fourth message to an access network device.

Correspondingly, the access network device receives the fourth message.

The fourth message is used for paging or used for activating a first multicast/broadcast session.

In an implementation, the second network device is an access management network element.

In this implementation, the fourth message may be a paging message or a notification message sent by the access management network element to the access network device.

The fourth message includes sixth information, and the sixth information indicates activation or release of the first multicast/broadcast session.

That the sixth information indicates activation or release of the first multicast/broadcast session may be understood as: in some cases, the sixth information indicates activation of the first multicast/broadcast session; and in other cases, the sixth information indicates release of the first multicast/broadcast session.

Specifically, the sixth information may be fifth information.

That is, the sixth information may be the event information in the foregoing method 200, or may be the first information in the foregoing method 200.

For example, a multicast/broadcast session management network element sends the event information to a session management network element. Further, the session management network element sends the event information to the access management network element, and the access management network element sends the event information to the access network device. In this case, the sixth information is the same as the event information.

For another example, the multicast/broadcast session management network element sends the event information to the session management network element. Further, the session management network element generates the first information based on the event information, and sends the first information to the access management network element. The access management network element sends the first information to the access network device. In this case, the sixth information is the same as the first information.

For another example, the multicast/broadcast session management network element sends the event information to the session management network element, the session management network element sends the event information to the access management network element, and the access management network element generates the first information based on the event information. Further, the access management network element sends the first information to the access network device. In this case, the sixth information is the same as the first information.

It should be understood that for a specific description of the event information, a specific description of the first information, a process of sending the event information, a process of generating the first information based on the event information, and a process of sending the first information, refer to the foregoing method 200. Details are not described herein again.

In another implementation, the second network device is the multicast/broadcast session management network element.

Specifically, in this implementation, the fourth message may be a multicast/broadcast session activation message sent by the multicast/broadcast session management network element to the access network device.

For example, after the multicast/broadcast session management network element obtains information about multicast session activation, the multicast/broadcast session management network element sends the multicast/broadcast session activation message to the access network device through the access management network element. The fourth message is used for activating the first multicast/broadcast session.

The multicast/broadcast session activation message carries the sixth information, and the sixth information indicates activation of the first multicast/broadcast session.

Specifically, the sixth information may be an identifier of a first multicast/broadcast service.

S320: If terminal devices joining the first multicast/broadcast session include a second terminal device, the access network device does not send a fifth message, where the fifth message may be a paging message at a multicast group granularity, that is, a paging identifier used by the paging message is an identifier of the first multicast/broadcast session, and the fifth message may be used for paging a third terminal device.

It should be noted that, that the access network device does not send the fifth message may also be understood as: the access network device does not perform group paging (does not perform group paging); or it may be understood as: the access network device does not page the second terminal device (does not page the group member allowed to receive the multicast service in RRC-inactive).

The second terminal device is in a radio resource control inactive state, and the second terminal device is allowed to receive the first multicast/broadcast service in the radio resource control inactive state. The first multicast/broadcast session is used for transmitting the first multicast/broadcast service. Alternatively, the second terminal device is in the radio resource control inactive state, and the second terminal device supports receiving a multicast/broadcast service in the radio resource control inactive state.

In an example, the second terminal device is in the radio resource control inactive state, and the second terminal device is allowed to receive the first multicast/broadcast service in the radio resource control inactive state.

It should be noted that the terminal devices joining the first multicast/broadcast session may include a plurality of (two or more) terminal devices. A terminal device, among the plurality of terminal devices, that is in the radio resource control inactive state and that is allowed to receive the first multicast/broadcast service in the radio resource control inactive state may be denoted as a second terminal device. The second terminal device may be one or more terminal devices. This is not limited. For example, it is assumed that there are four terminal devices joining the first multicast/broadcast session: a terminal device 1, a terminal device 2, a terminal device 3, and a terminal device 4. Among the four terminal devices, a terminal device that is in the radio resource control inactive state and that is allowed to receive the first multicast/broadcast service in the radio resource control inactive state is the terminal device 1. The second terminal device herein is the terminal device 1.

In another example, the second terminal device is in the radio resource control inactive state, and the second terminal device supports receiving a multicast/broadcast service in the radio resource control inactive state.

It should be noted that the terminal devices joining the first multicast/broadcast session may include a plurality of (two or more) terminal devices. A terminal device, among the plurality of terminal devices, that is in the radio resource control inactive state and that supports receiving a multicast/broadcast service in the radio resource control inactive state may be denoted as a second terminal device. The second terminal device may be one or more terminal devices. This is not limited. For example, it is assumed that there are four terminal devices joining the first multicast/broadcast session: a terminal device 1, a terminal device 2, a terminal device 3, and a terminal device 4. Among the four terminal devices, terminal devices that are in the radio resource control inactive state and that support receiving a multicast/broadcast service in the radio resource control inactive state are the terminal device 1 and the terminal device 2. The second terminal device herein refers to the terminal device 1 and the terminal device 2.

It should be understood that there may be an intersection set between the terminal device that is in the radio resource control inactive state and that is allowed to receive the first multicast/broadcast service in the radio resource control inactive state and the terminal devices that are in the radio resource control inactive state and that support receiving a multicast/broadcast service in the radio resource control inactive state.

The terminal devices joining the first multicast/broadcast session are denoted as third terminal devices. For specific descriptions of the third terminal device, refer to the method 200. Details are not described herein again.

According to the method provided in the foregoing embodiment, after the access network device receives the sixth information indicating activation of the first multicast/broadcast session, when the terminal devices joining the first multicast/broadcast session include the second terminal device, the access network device does not send the fifth message. The fifth message is used for group paging. In other words, if the terminal devices joining the first multicast/broadcast session include the second terminal device, the access network device does not use a group paging message. In this way, some terminal devices that join the first multicast/broadcast session are paged, thereby avoiding paging the second terminal device, further preventing the second terminal device from entering the connected state, and helping reduce network resources.

In an implementation, the fifth message carries the identifier of the first multicast/broadcast session.

For specific descriptions of the identifier of the first multicast/broadcast session, refer to the foregoing method 200. Details are not described herein again.

Specifically, when the third terminal devices include the second terminal device, the access network device does not send a paging message that carries the identifier of the first multicast/broadcast session. In other words, the access network device does not page the third terminal devices by using the identifier of the first multicast/broadcast session. This can prevent the second terminal device from being paged.

In another embodiment of this application, in S310, the sixth information indicates release of the first multicast/broadcast session.

In this embodiment, S320 may be replaced with: the access network device sends a fifth message, where the fifth message is used for paging terminal devices that join the first multicast/broadcast session.

Specifically, in this embodiment, the sixth information indicates release of the first multicast/broadcast session. Therefore, the access network device sends the fifth message, and pages the third terminal devices by using the fifth message.

It should be understood that the fifth message is used for paging the terminal devices that join the first multicast/broadcast session. In other words, the fifth message is used for group paging; or the fifth message includes the identifier of the first multicast/broadcast session.

It should be understood that for specific steps in the foregoing embodiment, refer to the method 300. Details are not described herein again.

According to the method provided in the foregoing embodiment, after receiving the sixth information indicating release of the first multicast/broadcast session, the access network device sends the fifth message, where the fifth message is used for paging the terminal devices that join the first multicast/broadcast session. In other words, when the sixth information indicates release of the first multicast/broadcast session, the access network device uses the group paging message. In this way, all terminal devices that join the first multicast/broadcast session are paged, thereby helping reduce network resources.

In an implementation scenario of the foregoing embodiment, the method 300 further includes: the access network device sends a sixth message.

The sixth message is used for paging a terminal device in an idle state that joins the first multicast/broadcast session.

It should be noted that the terminal devices joining the first multicast/broadcast session may include a plurality of (two or more) terminal devices, and a terminal device in the idle state among the plurality of terminal devices may be denoted as a fourth terminal device. The fourth terminal device may be one or more terminal devices. This is not limited. For example, it is assumed that four terminal devices join the first multicast/broadcast session: a terminal device 1, a terminal device 2, a terminal device 3, and a terminal device 4. Among the four terminal devices, a terminal device in the idle state is the terminal device 4. The fourth terminal device herein is the terminal device 4.

The sixth message may be used for paging the fourth terminal device.

In an implementation, the sixth message may be a paging message, and the sixth message may carry an identifier of the fourth terminal device.

Specifically, the identifier of the fourth terminal device may be one or more of the following: a temporary mobile subscription identifier (5G S-temporary mobile subscription identifier, 5G-S-TMSI) of the fourth terminal device, a subscription permanent identifier (subscription permanent identifier, SUPI) of the fourth terminal device, a subscription concealed identifier (subscription concealed identifier, SUCI) of the fourth terminal device, a generic public subscription identifier (generic public subscription identifier, GPSI) of the fourth terminal device, a permanent equipment identifier (permanent equipment identifier, PEI) of the fourth terminal device, an international mobile subscriber identity (international mobile subscriber identity, IMSI) of the fourth terminal device, a globally unique temporary identity (globally unique temporary identity, GUTI) of the fourth terminal device, a next generation application protocol terminal identifier (next generation application protocol UE ID, NGAP UE ID) of the fourth terminal device, or the like.

In an implementation scenario of the foregoing embodiment, the method 300 further includes: if none of the terminal devices that join the first multicast/broadcast session is in the radio resource control inactive state, the access network device sends the fifth message.

Specifically, the access network device may obtain statuses of the third terminal devices. The statuses of the third terminal devices include which of the third terminal devices are in the radio resource control inactive state, which are in the idle state, and which are in the connected state.

The access network device may obtain the statuses of the third terminal devices in the following manner: the access network device has a context of the first multicast/broadcast session, and the context of the first multicast/broadcast session includes identification information of the third terminal device. The access network device further has contexts of the third terminal devices, and the contexts of the third terminal devices include identifiers of the third terminal devices. If a terminal device A in the third terminal devices is in the idle state, a context of the terminal device A is deleted from the access network device. Therefore, the access network device may obtain a terminal device in the idle state in the third terminal devices based on the context of the first multicast/broadcast session and an identifier of a terminal device whose terminal device context is absent. If a terminal device B in the third terminal devices is in the radio resource control inactive state, a context of the terminal device B still exists in the access network device, and an identifier of the context of the terminal device B is an inactive-radio network temporary identifier (inactive-radio network temporary identifier, I-RNTI). Therefore, the access network device may obtain a terminal device in the radio resource control inactive state among the third terminal devices based on the context of the first multicast/broadcast session and identification information of the contexts of the third terminal device. If a terminal device C in the third terminal devices is in the connected state, a context of the terminal device C still exists in the access network device, and an identifier of the context of the terminal device C is a cell-radio network temporary identifier (cell-radio network temporary identifier, C-RNTI). Therefore, the access network device may obtain a terminal device in the connected state among the third terminal devices based on the context of the first multicast/broadcast session and identification information of the contexts of the third terminal devices.

It should be understood that the terminal device A, the terminal device B, and the terminal device C each may be one or more terminal devices.

When none of the third terminal devices is in the radio resource control inactive state, the access network device may send the fifth message, where the fifth message carries the identifier of the first multicast/broadcast session.

In other words, the access network device pages the third terminal devices by using the identifier of the first multicast/broadcast session carried in the fifth message.

In an implementation scenario of the foregoing embodiment, the second terminal device is a terminal device in the radio resource control inactive state that joins the first multicast/broadcast session and is allowed to receive the first multicast/broadcast service in the radio resource control inactive state. The method 300 further includes: the access network device determines, based on at least one of second information and third information, whether the third terminal devices include the second terminal device.

The second information indicates that a terminal device is allowed to receive a multicast/broadcast service in the radio resource control inactive state.

Specifically, for descriptions of the second information, refer to the foregoing method 200. Details are not described again.

The second information may be from the access management network element, the session management network element, or the multicast/broadcast session management network element.

Specifically, for a specific manner in which the second information is from the access management network element, the session management network element, or the multicast/broadcast session management network element, refer to the foregoing method 200. Details are not described again.

In an example, the terminal device that is indicated by the second information and that is allowed to receive a multicast/broadcast service in the radio resource control inactive state may be a fifth terminal device, and the fifth terminal device is a terminal device that has a terminal device context (UE context) on a first network device side.

Terminal devices registered with a network include the fifth terminal device.

The fifth terminal device may include a first terminal device, and the first terminal device may include the second terminal device.

Specifically, the second information may carry an identifier of the fifth terminal device, and the second information may further carry an indication of being allowed.

That the access network device determines, based on the second information, whether the third terminal devices include the second terminal device includes: the access network device determines whether the third terminal devices include a terminal device that is allowed to receive a multicast/broadcast service in the radio resource control inactive state; and the access network device determines a terminal device in the radio resource control inactive state among the third terminal devices.

Specifically, the access network device may determine, based on whether the third terminal devices include a terminal device that is allowed to receive a multicast/broadcast service in the radio resource control inactive state and based on the terminal device in the radio resource control inactive state among the third terminal devices, whether the third terminal devices include the second terminal device.

That the access network device determines whether the third terminal devices include a terminal device that is allowed to receive a multicast/broadcast service in the radio resource control inactive state includes: the access network device may determine, based on whether the third terminal devices include the fifth terminal device, whether the third terminal devices include a terminal device that is allowed to receive a multicast/broadcast service in the radio resource control inactive state. Alternatively, the access network device may determine, based on whether the access network device receives an indication of being allowed from an N2 connection related to the third terminal devices, whether the third terminal devices include a terminal device that is allowed to receive a multicast/broadcast service in the radio resource control inactive state.

That the access network device determines a terminal device in the radio resource control inactive state among the third terminal devices includes: the access network device may determine, based on the statuses of the third terminal devices, the terminal device in the radio resource control inactive state among the third terminal devices.

The third information indicates that the first multicast/broadcast service is allowed to be received by a terminal device in the radio resource control inactive state.

Specifically, for descriptions of the third information, refer to the foregoing method 200. Details are not described again.

The third information may be from the access management network element, the session management network element, or the multicast/broadcast session management network element.

Specifically, for a specific manner in which the third information is from the access management network element, the session management network element, or the multicast/broadcast session management network element, refer to the foregoing method 200. Details are not described again.

That the access network device determines, based on the third information, whether the third terminal devices include the second terminal device includes: the access network device determines, based on whether the context of the first multicast/broadcast session includes an indication of allowing a terminal device in the radio resource control inactive state to receive the first multicast/broadcast service and based on the statuses of the third terminal devices in the context of the first multicast/broadcast session, whether the third terminal devices include the second terminal device.

In an implementation scenario of the foregoing embodiment, the second terminal device is a terminal device in the radio resource control inactive state that joins the first multicast/broadcast session and supports receiving a multicast/broadcast service in the radio resource control inactive state, and the method 300 further includes:
the access network device determines, based on fourth information, whether the third terminal devices include the second terminal device.

The fourth information indicates whether a terminal device supports receiving a multicast/broadcast service in the radio resource control inactive state.

The terminal device may be a terminal device registered with the network, or may be a third terminal device.

Specifically, for descriptions of the fourth information, refer to the foregoing method 200. Details are not described again.

The fourth information may be from the terminal device, the access management network element, or the session management network element.

Specifically, for a specific manner in which the fourth information is from the terminal device, the access management network element, or the session management network element, refer to the foregoing method 200. Details are not described again.

It should be noted that the implementation scenarios of the embodiment shown in FIG. 5 may be combined with each other. This is not limited.

FIG. 6 is a diagram of a multicast/broadcast service communication method 400 according to an embodiment of this application. The method 400 may include the following steps.

S410: An access network device sends a seventh message.

Correspondingly, a first terminal device receives the seventh message.

The seventh message is used for paging.

Specifically, the seventh message may be a paging message.

The seventh message includes an identifier of a first multicast/broadcast session.

For specific descriptions of the identifier of the first multicast/broadcast session, refer to the foregoing method 200. Details are not described herein again.

The first terminal device joins the first multicast/broadcast session, and the first terminal device is in a radio resource control inactive state.

For specific descriptions of the first terminal device, refer to the foregoing method 200. Details are not described herein again.

S420: The first terminal device keeps in the radio resource control inactive state if the first terminal device is allowed to receive a first multicast/broadcast service in the radio resource control inactive state, or if the first terminal device supports receiving a multicast/broadcast service in the radio resource control inactive state, or if the first terminal device supports receiving a multicast/broadcast service in the radio resource control inactive state and is allowed to receive the first multicast/broadcast service in the radio resource control inactive state.

The first multicast/broadcast session is used for transmitting the first multicast/broadcast service.

In other words, in the method 400, the first terminal device may determine, based on the seventh message and whether receiving a multicast/broadcast service in the radio resource control inactive state is supported or allowed, whether to keep in the radio resource control inactive state.

According to the method provided in the foregoing embodiment, after the first terminal device receives the seventh message used for paging, the first terminal device keeps in the radio resource control inactive state when the first terminal device is allowed to receive the first multicast/broadcast service in the radio resource control inactive state, or when the first terminal device supports receiving a multicast/broadcast service in the radio resource control inactive state, so that a terminal device in the radio resource control inactive state that can receive the first multicast/broadcast service in the radio resource control inactive state does not enter a connected state, thereby helping reduce network overheads.

Optionally, in an implementation scenario of the foregoing embodiment, the method 400 further includes: the first terminal device enters a connected state if the first terminal device does not support receiving a multicast/broadcast service in the radio resource control inactive state, or if the first terminal device is not allowed to receive the first multicast/broadcast service in the radio resource control inactive state.

Optionally, in an implementation scenario of the foregoing embodiment, after the first terminal device keeps in the radio resource control inactive state, the method 400 further includes: the first terminal device receives the first multicast/broadcast service by using the first multicast/broadcast session.

For a specific meaning of keeping in the radio resource control inactive state, refer to the foregoing method 200.

In another embodiment, the seventh message in S410 may be replaced with an eighth message, and the eighth message includes an identifier of the first terminal device.

Specifically, the eighth message is used for paging, or the eighth message is used for paging the first terminal device.

That is, if the first terminal device obtains the identifier of the first terminal device by parsing the eighth message, the first terminal device enters the connected state.

Specifically, for release of the first multicast/broadcast session, the access network device sends a paging message for a terminal device, where the paging message carries the identifier of the first terminal device.

The identifier of the first terminal device may be an I-RNTI of the first terminal device.

If the first terminal device receives the identifier of the first terminal device, the first terminal device enters the connected state. If the first terminal device does not receive the identifier of the first terminal device, the first terminal device keeps in the radio resource control inactive state.

In other words, the first terminal device may determine, based on whether the paging message includes the identifier of the first terminal device, whether to keep in the radio resource control inactive state.

Optionally, in an implementation scenario of the foregoing embodiment, the method 400 further includes: the first terminal device determines, based on at least one of second information and third information, whether the first terminal device is allowed to receive the first multicast/broadcast service in the radio resource control inactive state.

Similarly, the second information may be from the access network device, an access management network element, a session management network element, a multicast/broadcast session management network element, or an application network element, and the third information may be from the access network device, the access management network element, the session management network element, the multicast/broadcast session management network element, or the application network element.

Specifically, for a specific implementation of this implementation scenario, refer to the foregoing method 200.

Optionally, in an implementation scenario of the foregoing embodiment, the method 400 further includes: the first terminal device sends fourth information to a first network element.

Specifically, the first network element may be the access network device, the access management network element, the session management network element, or the application network element.

Specifically, for a specific implementation of this implementation scenario, refer to the foregoing method 200.

Optionally, in any implementation scenario of the foregoing embodiment, the first terminal device is located in a service area of the first multicast/broadcast session.

Specifically, for a specific implementation of this implementation scenario, refer to the foregoing method 200.

In an implementation, the second message in the method 200 and the fourth message in the method 300 are a same message. For example, the same message is a paging message sent by the access management network element to the access network device. For another example, the same message is a notification message sent by the access management network element to the access network device.

In an implementation, the second message in the method 200 and the fourth message in the method 300 carry same information. For example, the same information is the event information. For another example, the same information is the first information.

In an implementation, the fifth message in the method 300 and the seventh message in the method 400 are a same message. For example, the same message is a paging message sent by the access network device, and the paging message is used for group paging. For another example, the same message is a notification message sent by the access network device.

In an implementation, the fifth message in the method 300 and the seventh message in the method 400 carry same information. For example, the same information is the identifier of the first multicast/broadcast session.

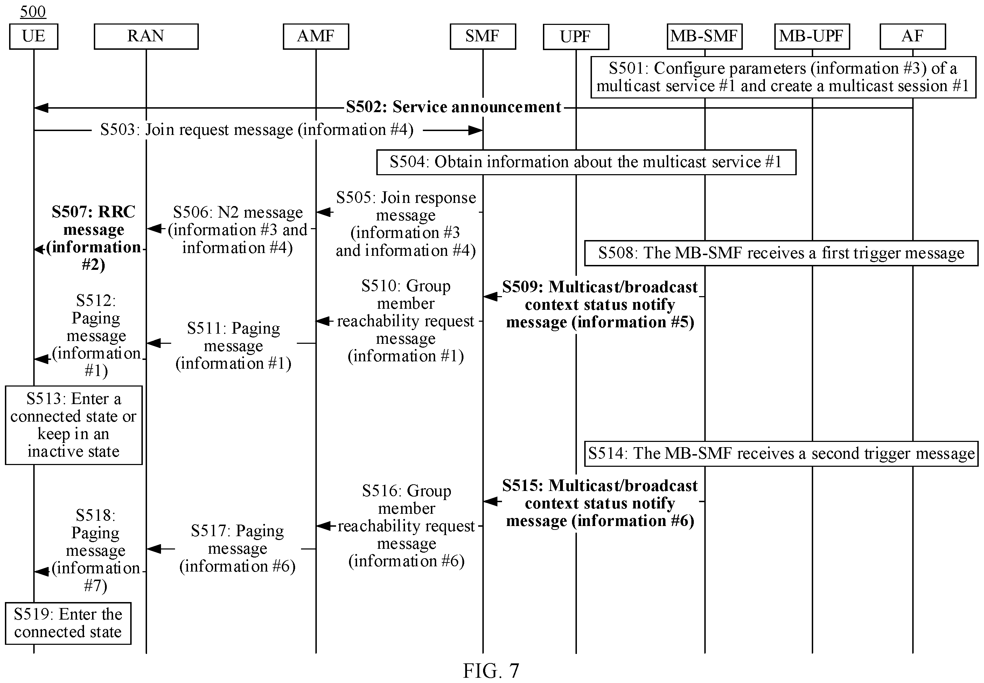

The following describes in detail the multicast/broadcast service communication method provided in embodiments of this application with reference to FIG. 7 to FIG. 9.

For ease of understanding, the following uses an example in which the access network device is a RAN, the access management network element is an AMF, the session management network element is an SMF, the application network element is an AF, and the third terminal devices are UE #1, UE #2, UE #3, and UE #4 for description.

FIG. 7 is a diagram of a multicast/broadcast service communication method 500 according to an embodiment of this application. For example, the method 500 shown in FIG. 7 may be considered as a specific implementation of the method 200. The method 500 may include the following steps.

S501: An AF, an MB-SMF, and an MB-UPF configure parameters of a multicast service #1 (an example of a first multicast/broadcast service) and create a multicast session #1 (an example of a first multicast/broadcast session).

When an AS has a transmission requirement of the multicast service #1, the AF may send a request message to an NEF. The request message is used for requesting to establish the multicast session #1, and the multicast session #1 is used for transmitting the multicast service #1. Further, the NEF determines, based on the request message, the MB-SMF used to manage the multicast session #1, and sends a request message to the MB-SMF. After receiving the request message, the MB-SMF determines policy information of the multicast service #1 based on a preconfigured mapping relationship between a service identifier and a policy, and establishes the multicast session #1 based on the determined policy information of the multicast service #1.

After the multicast session #1 is created, the AF provides the parameters of the multicast service #1 for the MB-SMF. The parameters of the multicast service #1 may include requirement information of the multicast service #1 and an identifier of the multicast session #1.

For example, the identifier of the multicast session #1 is a TMGI.

The requirement information of the multicast service #1 may include: bandwidth required by the multicast service #1, a data transmission priority of the multicast service #1, quality of service (quality of service, QoS) information of the multicast service #1, an attribute of the multicast service #1, and the like.

The attribute of the multicast service #1 includes information #3 (an example of the third information), and the information #3 indicates that the multicast service #1 is allowed to be received by a terminal device (an example of the third terminal device) in an RRC-inactive state that joins the multicast service #1.

It should be understood that if the requirement information of the multicast service #1 does not include the QoS information of the multicast service #1, the MB-SMF may generate the QoS information of the multicast service #1 based on the policy information of the multicast service #1.

The MB-SMF configures the MB-UPF based on the parameters of the multicast service #1. For example, the MB-UPF is configured to identify data of the multicast service #1, and a forwarding rule of the data of the multicast service #1 in the MB-UPF is configured.

It should be noted that the parameters of the multicast service #1 may be directly sent by the AF network element to the MB-SMF network element, or may be sent to the MB-SMF network element through one or more of the following network elements: the NEF network element (not shown in FIG. 6), a PCF network element (not shown in FIG. 6), a UDM network element (not shown in FIG. 6), and the like.

S502: The AF sends a service announcement (service announcement) to UE.

Specifically, the service announcement includes the TMGI.

S503: The UE sends a join request message to an SMF by using a PDU session.

Specifically, the join request message may be a PDU session modification request (PDU session modification request) message, a PDU session establishment request (PDU session establishment request) message, or the like.

The join request message is used for requesting to join the multicast session #1, and the join request message includes the identifier of the multicast session #1.

The join request message may include information #4 (an example of the fourth information), and the information #4 indicates whether the UE supports receiving an MBS in the RRC-inactive state.

Specifically, UE joining the multicast session #1 may include UE #1, UE #2, UE #3, and UE #4.

The UE #1 and the UE #4 include the information #4 in the join request message, and the UE #2 and the UE #3 do not include the information #4 in the join request message.

S504: The SMF obtains information about the multicast service #1.

Specifically, the SMF obtains the information about the multicast service #1 from the MB-SMF based on the identifier of the multicast session #1. The information about the multicast service #1 includes the parameters of the multicast service #1.

The parameters of the multicast service #1 include the information #3.

S505: The SMF sends a join response message to an AMF.

For example, if the join request message is the PDU session modification request message, the SMF may send a PDU session context update response (Nsmf_PDUSession_UpdateSMContext response) message to the AMF. The PDU session context update response message includes an N1 SM container (container), the N1 SMcontainer includes a PDU session modification accept (accept) message, and the PDU session modification accept message is used to respond to the join request message.

The join response message further includes the information #3 and the information #4.

S506: The AMF sends an N2 message to a RAN.

For example, the N2 message may be an N2 message request (N2 message request) message. The N2 message request message includes the information #3 and the information #4.

The N2 message request message may further include a NAS message sent by the AMF to the UE, and the NAS message includes the PDU session modification accept message.

S507: The RAN sends an RRC message to the UE.

Specifically, the RAN may send the PDU session modification accept message to the UE #1, the UE #2, the UE #3, and the UE #4 by using the RRC message.

Optionally, the RAN may further generate information #2 (an example of the second information) based on the information #4 and the information #3, where the information #2 indicates that the UE is allowed to receive the multicast service #1 in the RRC-inactive state.

Further, the RAN may determine whether to send the information #4 to the UE #1, the UE #2, the UE #3, and the UE #4, and if the information #4 is sent, the RRC message may include the information #2.

For example, if the RAN receives the information #4 of the UE #1 from the AMF, the RAN does not send the information #2 to the UE #1.

For another example, the RAN sends the information #2 to the UE #2 based on a channel congestion degree.

For another example, if the UE #3 and the UE #4 are located in a cell center, the RAN does not send the information #2 to the UE #3 and the UE #4.

S508: The MB-SMF receives a first trigger message.

The first trigger message is an MBS session update request message or an N4 notification message.

For example, the MB-SMF receives an MBS session update request (Nmbsmf_ MBSSession Update_Request) message from the AF. The MBS session update request message is used for requesting to activate the multicast session #1. Alternatively, the MB-SMF receives an N4 notification (N4mb notification) message or a packet forwarding control protocol (packet forwarding control protocol, PFCP) notification message from the MB-UPF. The N4 notification message or the PFCP notification message is used to notify that the session #1 is activated or the like.

S509: The MB-SMF sends a multicast/broadcast context status notify message to the SMF.

After receiving the first trigger message, the MB-SMF instigates a procedure for activating the multicast session #1.

Specifically, the MB-SMF sends the multicast/broadcast context status notify message to the SMF, where the multicast/broadcast context status notify message includes the TMGI.

The multicast/broadcast context status notify message further includes information #5 (an example of the event information).

The information #5 indicates activation of the multicast session #1.

The information #5 may be in any form in which the event information described in step S210 indicates activation of the first multicast/broadcast session.

S510: The SMF sends a group member reachability request message (an example of the first message) to the AMF.

The group member reachability request message includes a list of UEs that previously request to join the multicast service, that is, the UE #1, the UE #2, the UE #3, and the UE #4.

Specifically, the SMF may determine, based on the information #5, that the multicast session #1 is activated. Further, the SMF may generate information #1 (an example of the first information) based on the information #5.

The information #1 may be in any form in which the first information described in step S220 indicates activation of the first multicast/broadcast session.

The group member reachability request message may further include the information #1 generated by the SMF.

The group member reachability request message may further include the TMGI.

S511: The AMF sends a paging message (which is an example of the second message, and is also an example of the fourth message) to the RAN.

The paging message may include the information #1 received by the AMF.

The paging message may further include the TMGI.

S512: The RAN sends a paging message (an example of the third message).

The paging message may include the information #1 received by the RAN.

The paging message may further include the TMGI.

S513: The UE enters a connected state or keeps in the RRC-inactive state.

Specifically, the UE determines, based on the information #1, that the multicast session #1 is activated, and the UE may further determine, based on the information #2, the information #3, or the information #4, to enter the connected state or keep in the RRC-inactive state.

For example, if the UE #1 supports receiving an MBS in the RRC-inactive state, and the UE #1 is in the RRC-inactive state, the UE #1 keeps in the RRC-inactive state. Subsequently, the UE #1 may receive the data of the multicast service #1 in the RRC-inactive state.

For another example, if the UE #2 receives the information #2, and the UE #2 is in the RRC-inactive state, the UE #2 keeps in the RRC-inactive state. Subsequently, the UE #2 may receive the data of the multicast service #1 in the RRC-inactive state, and enter the connected state.

For another example, if the UE #3 does not receive the information #2 and the information #3, and the UE #3 is in the RRC-inactive state, the UE #3 enters the connected state.

For another example, if the UE #4 is in an idle state, the UE #4 enters the connected state.

It should be understood that in steps S510 to S512, an example in which the SMF generates the information #1 is used for description. The SMF may be considered as an example of the first network device.

In another possible implementation, the SMF may alternatively send the information #5 to the AMF, and the AMF generates the information #1. The information #1 generated by the AMF may be a paging cause (paging cause). Further, the AMF sends the information #1 to the RAN.

In still another possible implementation, the SMF sends the information #5 to the AMF, the AMF continues to send the information #5 to the RAN, and the RAN generates the information #1.

S514: The MB-SMF receives a second trigger message.

The second trigger message is an MBS session update request message or an N4 notification message.

For example, the MB-SMF receives an MBS session release request (Nmbsmf_MBSSession_Delete Request) message from the AF, where the MBS session release request message is used for requesting to release the multicast session #1; or the MB-SMF receives an N4 notification (N4mb notification) or a PFCP notification message from the MB-UPF, where the N4 notification message or the PFCP notification message is used for notifying that the multicast session #1 is released.

S515: The MB-SMF sends a multicast/broadcast context status notify message to the SMF.

After receiving the second trigger message, the MB-SMF instigates a procedure of releasing the multicast session #1.

Specifically, the MB-SMF sends the multicast/broadcast context status notify message to the SMF, where the multicast/broadcast context status notify message includes the TMGI.

The multicast/broadcast context status notify message further includes information #6 (another example of the event information).

The information #6 indicates release of the multicast session #1.

The information #6 may be in any form in which the event information described in step S210 indicates release of the first multicast/broadcast session.

S516: The SMF sends a group member reachability request message (an example of the first message) to the AMF.

The group member reachability request message includes a list of UEs that previously request to join the multicast service, that is, the UE #1, the UE #2, the UE #3, and the UE #4.

The group member reachability request message may further include the information #6 received by the SMF.

The group member reachability request message may further include the TMGI.

S517: The AMF sends a paging message (which is an example of the second message, and is also an example of the fourth message) to the RAN.

The paging message may include the information #6 received by the AMF.

The paging message may further include the TMGI.

S518: The RAN sends a paging message (an example of the third message).

The RAN determines, based on the information #6, that the multicast session is released, and the RAN may generate information #7. The information #7 indicates release of the multicast session #1.

The information #7 may be in any form in which the first information described in step S220 indicates release of the first multicast/broadcast session.

The paging message may include the information #7 generated by the RAN.

The paging message further includes the TMGI.

S519: The UE enters the connected state.

Specifically, if the UE #1, the UE #2, the UE #3, and the UE #4 all determine, based on the information #7, that the multicast session #1 is released, the UE #1, the UE #2, the UE #3, and the UE #4 enter the connected state based on the TMGI in the paging message.

It should be understood that in steps S510 to S512, an example in which the RAN generates the information #7 is used for description. The RAN may be considered as an example of the first network device.

In another possible implementation, the SMF may alternatively generate the information #7 based on the information #6, and send the information #7 to the AMF. Further, the AMF sends the information #7 to the RAN.

In still another possible implementation, the AMF may alternatively generate the information #7 based on the information #6, and send the information #7 to the RAN.

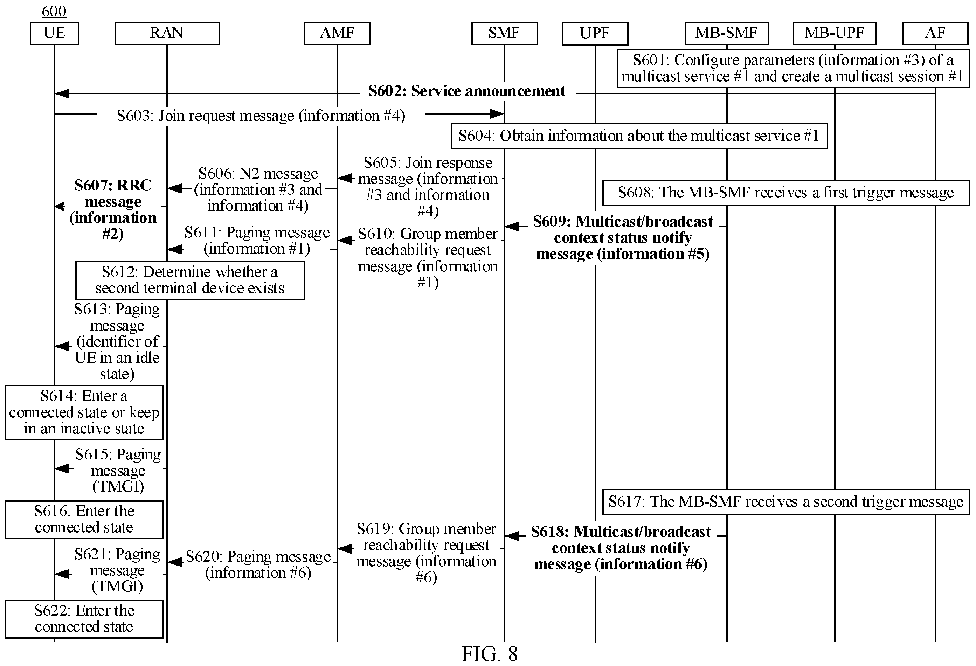

FIG. 8 is a diagram of a multicast/broadcast service communication method 600 according to an embodiment of this application. For example, the method 600 shown in FIG. 8 may be considered as a specific implementation of the method 300. The method 600 may include the following steps.

For S601 to S611, refer to S501 to S511.

S612: The RAN determines whether a second terminal device exists.

The RAN determines, based on the information #1, that the multicast session #1 is activated. Further, the RAN determines whether UE joining the multicast session #1 includes the second terminal device.

Specifically, the RAN may first obtain a status of the UE joining the multicast session #1.

For example, the UE #1, the UE #2, and the UE #3 are in the RRC-inactive state, and the UE #4 is in an idle state.

The RAN may further determine, based on the information #2, the information #3, and the information #4, whether the UE joining the multicast session #1 includes the second terminal device.

For example, if the RAN receives information #4 of the UE #1, the RAN determines that the second terminal device includes the UE #1, that is, the second terminal device exists.

For another example, if the RAN sends the information #2 to the UE #2, the RAN determines that the second terminal device includes the UE #2, that is, the second terminal device exists.

In addition, if the RAN does not receive information #4 of the UE #1, the UE #2, and the UE #3 before S612, does not send the information #2 to the UE #1, the UE #2, and the UE #3, and does not send the information #3 to the UE #1, the UE #2, and the UE #3 either, the RAN determines that the second terminal device does not exist.

The following provides description based on two cases: the UE joining the multicast session #1 includes the second terminal device, and the UE joining the multicast session #1 does not include the second terminal device.

Case 1: If the UE joining the multicast session #1 includes the second terminal device, the RAN performs S613, and further, the UE performs S614 according to S613.

S613: The RAN sends a paging message (an example of the sixth message).

The paging message includes an identifier of the UE #4.

It should be noted that the RAN determines, based on the information #1, that the multicast session #1 is activated. Therefore, the paging message may not carry the TMGI, and may carry an identifier of UE in the idle state, that is, the identifier of the UE #4.

S614: The UE enters a connected state or keeps in the RRC-inactive state.

Specifically, the UE determines to enter the connected state or keep in the RRC-inactive state based on whether the identifier of the multicast session #1 or an identifier of the UE is received on a paging channel.

For example, if the UE #1, the UE #2, and the UE #3 do not receive respective identifiers or the TMGI on the paging channel, the UE #1, the UE #2, and the UE #3 keep in the RRC-inactive state.

For another example, the UE #4 enters the connected state based on the identifier of the UE #4.

Case 2: If the UE joining the multicast session #1 does not include the second terminal device, processing is performed according to a solution defined in a current standard.

For example, the RAN may perform S615. Further, the UE performs S616 according to S615.

S615: The RAN sends a paging message (an example of the fifth message).

The paging message includes the identifier of the multicast session #1, that is, the TMGI.

S616: The UE enters the connected state.

Specifically, the UE #1, the UE #2, the UE #3, and the UE #4 all enter the connected state based on the TMGI in the paging message.

For S617 to S620, refer to S514 to S517.

S621: The RAN sends a paging message (an example of the fifth message).

If the RAN determines, based on the information #6, that the multicast session is released, the RAN sends a paging message, where the paging message includes the identifier of the multicast session #1, that is, the TMGI.

S622: The UE enters the connected state.

Refer to S616.

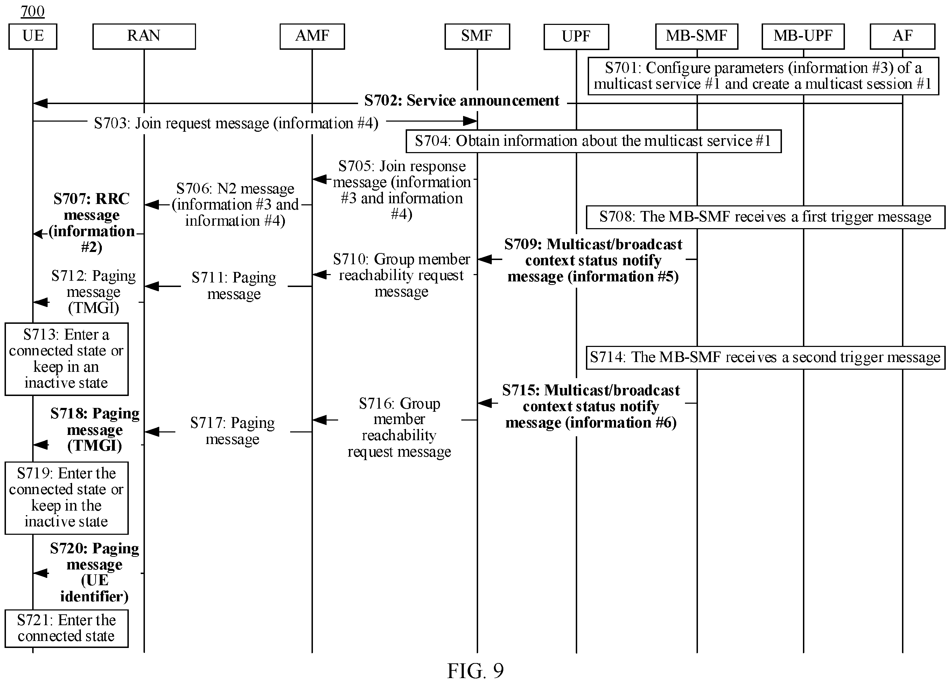

FIG. 9 is a diagram of a multicast/broadcast service communication method 700 according to an embodiment of this application. For example, the method 700 shown in FIG. 9 may be considered as a specific implementation of the method 400. The method 700 may include the following steps.

For S701 to S709, refer to S501 to S509.

S710: The SMF sends a group member reachability request message to the AMF.

The group member reachability request message includes a list of UEs that previously request to join the multicast service, that is, the UE #1, the UE #2, the UE #3, and the UE #4.

The group member reachability request message may further include the TMGI.

In other words, a difference between S710 and S510 lies in that in S710, the SMF neither generates the information #1 nor delivers the information #1 or the information #5 indicating activation of the multicast session #1.

S711: The AMF sends a paging message to the RAN.

The paging message may include the TMGI.

In other words, a difference between S711 and S511 lies in that in S711, the paging message does not include the information #1.

S712: The RAN sends a paging message (an example of the seventh message).

The paging message may include the TMGI.

In other words, a difference between S712 and S512 lies in that in S712, the paging message does not include the information #1.

S713: The UE enters a connected state or keeps in the RRC-inactive state.

Specifically, the UE may determine, based on the information #2, the information #3, or the information #4, to enter the connected state or keep in the RRC-inactive state.

For example, if the UE #1 supports receiving an MBS in the RRC-inactive state, and the UE #1 is in the RRC-inactive state, the UE #1 keeps in the RRC-inactive state. Subsequently, the UE #1 may receive the data of the multicast service #1 in the RRC-inactive state.

For another example, if the UE #2 receives the information #2, and the UE #2 is in the RRC-inactive state, the UE #2 keeps in the RRC-inactive state. Subsequently, the UE #2 may receive the data of the multicast service #1 in the RRC-inactive state, and enter the connected state.

For another example, if the UE #3 does not receive the information #2 and the information #3, and the UE #3 is in the RRC-inactive state, the UE #3 enters the connected state.

For another example, if the UE #4 is in an idle state, the UE #4 enters the connected state.

For S714 and S715, refer to S514 and S515.

S716: The SMF sends a group member reachability request message to the AMF.

The group member reachability request message includes a list of UEs that previously request to join the multicast service, that is, the UE #1, the UE #2, the UE #3, and the UE #4.

The group member reachability request message may further include the TMGI.

In other words, a difference between S716 and S516 lies in that in S716, the SMF does not continue to deliver the information #6 indicating activation of the multicast session #1.

S717: The AMF sends a paging message to the RAN.

The paging message may include the TMGI.

In other words, a difference between S717 and S517 lies in that in S717, the paging message does not include the information #6.

S718: The RAN sends a paging message (an example of the seventh message).

The paging message may include the TMGI.

In other words, a difference between S718 and S518 lies in that in S718, the RAN neither generates the information #7 nor uses the paging message to carry the information #6 or the information #7 indicating release of the multicast session #1.

S719: The UE enters the connected state or keeps in the RRC-inactive state.

Refer to S713.

S720: The RAN sends a paging message (an example of the eighth message) to the UE.

The paging message may include identifiers of the UE #1, the UE #2, the UE #3, and the UE #4.

S721: The UE enters the connected state.

Specifically, the UE #1, the UE #2, the UE #3, and the UE #4 all enter the connected state based on the respective UE identifiers.

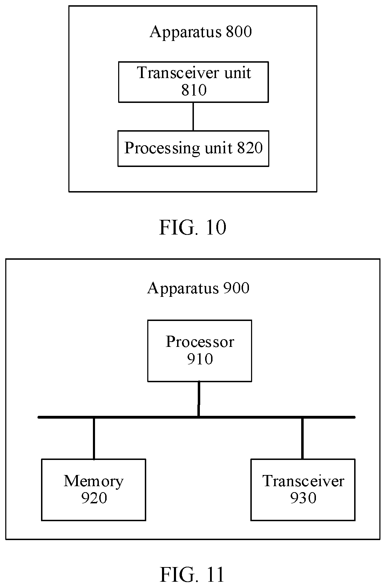

FIG. 10 is a diagram of a multicast/broadcast service communication apparatus 800 according to an embodiment of this application.

The apparatus 800 includes a transceiver unit 810 and a processing unit 820. The transceiver unit 810 may be configured to implement a corresponding communication function. The transceiver unit 810 may also be referred to as a communication interface or a communication unit. The processing unit 820 may be configured to perform information processing.

Optionally, the apparatus 800 further includes a storage unit. The storage unit may be configured to store instructions and/or data. The processing unit 820 may read the instructions and/or the data in the storage unit, so that the apparatus implements actions of different devices in the foregoing method embodiments, for example, actions of the first terminal device, the access network device, and the first network device.

In a design, the apparatus 800 is configured to perform actions performed by the first terminal device in the foregoing method embodiments.

In this case, the apparatus 800 may be the first terminal device or a component of the first terminal device. The transceiver unit 810 is configured to perform operations related to receiving and sending on the first terminal device side in the foregoing method embodiments. The processing unit 820 is configured to perform processing-related operations on the first terminal device side in the foregoing method embodiments.

In a possible implementation, the transceiver unit 810 is configured to receive first information. The first information indicates activation or release of a first multicast/broadcast session. The apparatus joins the first multicast/broadcast session, and the apparatus is in a radio resource control inactive state. The first multicast/broadcast session is used for transmitting a first multicast/broadcast service. The processing unit 820 is configured to enter a connected state or keep in the radio resource control inactive state based on the first information.

Optionally, the processing unit 820 is specifically configured to keep in the radio resource control inactive state if the first information indicates activation of the first multicast/broadcast session.

Optionally, the processing unit 820 is specifically configured to: keep in the radio resource control inactive state if the first information indicates activation of the first multicast/broadcast session and the apparatus is allowed to receive the first multicast/broadcast service in the radio resource control inactive state; or keep in the radio resource control inactive state if the first information indicates activation of the first multicast/broadcast session and the apparatus supports receiving a multicast/broadcast service in the radio resource control inactive state; or keep in the radio resource control inactive state if the first information indicates activation of the first multicast/broadcast session, the apparatus supports receiving a multicast/broadcast service in the radio resource control inactive state, and the apparatus is allowed to receive the first multicast/broadcast service in the radio resource control inactive state.

Optionally, the processing unit 820 is specifically configured to: enter the connected state if the first information indicates activation of the first multicast/broadcast session and the apparatus is not allowed to receive the first multicast/broadcast service in the radio resource control inactive state; or enter the connected state if the first information indicates activation of the first multicast/broadcast session and the apparatus does not support receiving a multicast/broadcast service in the radio resource control inactive state; or enter the connected state if the first information indicates release of the first multicast/broadcast session.

Optionally, the first information is from an access network device, an access management network element, a session management network element, a multicast/broadcast session management network element, or an application network element.

Optionally, the processing unit 820 is further configured to receive the first multicast/broadcast service by using the first multicast/broadcast session.

Optionally, the processing unit 820 is further configured to determine, based on at least one of second information and third information, whether the apparatus is allowed to receive the first multicast/broadcast service in the radio resource control inactive state. The second information indicates that the apparatus is allowed to receive a multicast/broadcast service in the radio resource control inactive state, and the third information indicates that the first multicast/broadcast service is allowed to be received by a terminal device in the radio resource control inactive state.

Optionally, the second information is from the access network device, the access management network element, or the session management network element, and the third information is from the access network device, the access management network element, or the session management network element.

Optionally, the transceiver unit 810 is further configured to send fourth information to a first network element. The fourth information indicates whether the first terminal device supports receiving a multicast/broadcast service in the radio resource control inactive state, and the first network element is the access network device, the access management network element, the session management network element, or the application network element.

Optionally, the apparatus is located in a service area of the first multicast/broadcast session.

The apparatus 800 may implement steps or procedures performed by the first terminal device in the method embodiment according to embodiments of this application. The apparatus 800 may include units configured to perform the method performed by the first terminal device in the embodiment shown in FIG. 4, or include units configured to perform the method performed by the UE in the embodiment shown in FIG. 7.

It should be understood that a specific process in which the units perform the foregoing corresponding steps is described in detail in the foregoing method embodiments. For brevity, details are not described herein.

In a design, the apparatus 800 is configured to perform actions performed by the first terminal device in the foregoing method embodiments.

In this case, the apparatus 800 may be the first terminal device or a component of the first terminal device. The transceiver unit 810 is configured to perform operations related to receiving and sending on the first terminal device side in the foregoing method embodiments. The processing unit 820 is configured to perform processing-related operations on the first terminal device side in the foregoing method embodiments.

In a possible implementation, the transceiver unit 810 is configured to receive an identifier of a first multicast/broadcast session. The apparatus joins the first multicast/broadcast session, the apparatus is in a radio resource control inactive state, and the first multicast/broadcast session is used for transmitting a first multicast/broadcast service. The processing unit 820 is configured to: keep in the radio resource control inactive state if the apparatus is allowed to receive the first multicast/broadcast service in the radio resource control inactive state; or keep in the radio resource control inactive state if the apparatus supports receiving a multicast/broadcast service in the radio resource control inactive state; or keep in the radio resource control inactive state if the apparatus supports receiving a multicast/broadcast service in the radio resource control inactive state and the apparatus is allowed to receive the first multicast/broadcast service in the radio resource control inactive state.

Optionally, the processing unit 820 is further configured to receive the first multicast/broadcast service by using the first multicast/broadcast session.

Optionally, the processing unit 820 is further configured to determine, based on at least one of second information and third information, whether the apparatus is allowed to receive the first multicast/broadcast service in the radio resource control inactive state. The first multicast/broadcast session is used for transmitting the first multicast/broadcast service. The second information indicates that the apparatus is allowed to receive a multicast/broadcast service in the radio resource control inactive state, and the third information indicates that the first multicast/broadcast service is allowed to be received by a terminal device in the radio resource control inactive state.

Optionally, the second information is from the access network device, the access management network element, or the session management network element, and the third information is from the access network device, the access management network element, or the session management network element.

Optionally, the transceiver unit 810 is further configured to send fourth information to a first network element. The fourth information indicates whether the first terminal device supports receiving a multicast/broadcast service in the radio resource control inactive state, and the first network element is the access network device, the access management network element, the session management network element, or the application network element.

Optionally, the apparatus is located in a service area of the first multicast/broadcast session.

The apparatus 800 may implement steps or procedures performed by the first terminal device in the method embodiment according to embodiments of this application. The apparatus 800 may include units configured to perform the method performed by the first terminal device in the embodiment shown in FIG. 6, or include units configured to perform the method performed by the UE in any one of the embodiments shown in FIG. 9.

It should be understood that a specific process in which the units perform the foregoing corresponding steps is described in detail in the foregoing method embodiments. For brevity, details are not described herein.

In a design, the apparatus 800 is configured to perform actions performed by the first network device in the method embodiments.

In this case, the apparatus 800 may be the first network device or a component of the first network device. The transceiver unit 810 is configured to perform operations related to receiving and sending on the first network device side in the foregoing method embodiments. The processing unit 820 is configured to perform processing-related operations on the first network device side in the foregoing method embodiments.

In a possible implementation, the transceiver unit 810 is configured to receive event information, where the event information includes an event identifier or an event type, and the event information indicates activation or release of a first multicast/broadcast session; and the processing unit 820 is configured to send fifth information based on the event information, where the fifth information indicates activation or release of the first multicast/broadcast session.

Optionally, the apparatus is a session management network element, the fifth information includes indication information, and the indication information indicates activation or release of the first multicast/broadcast session.

Optionally, the fifth information is carried in a first message, and the first message is used for requesting reachability of a terminal device.

Optionally, the transceiver unit 810 is further configured to: obtain second information and/or third information, where the second information indicates that the first terminal device is allowed to receive a multicast/broadcast service in the radio resource control inactive state, the third information indicates that the first multicast/broadcast service is allowed to be received by a terminal device in the radio resource control inactive state, and the first multicast/broadcast session is used for transmitting the first multicast/broadcast service; and send the second information and/or the third information to an access management network element or an access network device.

Optionally, the transceiver unit 810 is specifically configured to receive the second information and/or the third information from a multicast/broadcast session management network element or a policy control function network element.

Optionally, the transceiver unit 810 is further configured to: receive fourth information from the terminal device, where the fourth information indicates whether the terminal device supports receiving a multicast/broadcast service in the radio resource control inactive state; and send the fourth information to the access management network element or the access network device.

Optionally, the apparatus is the access management network element, the event information is carried in a first message, and the first message is used for requesting reachability of the terminal device.

Optionally, the fifth information is carried in a second message, and the second message includes a group paging message.

Optionally, the transceiver unit 810 is further configured to: receive second information and/or third information from a session management network element, where the second information indicates that the terminal device is allowed to receive a multicast/broadcast service in the radio resource control inactive state, the third information indicates that the first multicast/broadcast service is allowed to be received by a terminal device in the radio resource control inactive state, and the first multicast/broadcast session is used for transmitting the first multicast/broadcast service; and send the second information and/or the third information to an access network device.

Optionally, the transceiver unit 810 is further configured to: obtain fourth information, where the fourth information indicates whether the terminal device supports receiving a multicast/broadcast service in the radio resource control inactive state; and send the fourth information to the access network device.

Optionally, the transceiver unit 810 is specifically configured to send the fourth information to the access network device by using a terminal device context modification request message or an initial context setup request message.

Optionally, the transceiver unit 810 is specifically configured to receive the fourth information from the terminal device or a unified data management network element.

Optionally, the apparatus is an access network device, the event information is carried in a second message, and the second message includes a group paging message.

Optionally, the fifth information is carried in a third message, the third message is used for paging, and the third message includes an identifier of the first multicast/broadcast session.

Optionally, the transceiver unit 810 is further configured to: receive second information and/or third information, where the second information indicates that the terminal device is allowed to receive a multicast/broadcast service in the radio resource control inactive state, the third information indicates that the first multicast/broadcast service is allowed to be received by a terminal device in the radio resource control inactive state, and the first multicast/broadcast session is used for transmitting the first multicast/broadcast service; and send the second information and/or the third information to the terminal device.

Optionally, the transceiver unit 810 is further configured to receive fourth information, where the fourth information indicates whether the terminal device supports receiving a multicast/broadcast service in the radio resource control inactive state.

Optionally, the fourth information is carried in a terminal device context modification request message or an initial context setup request message.

Optionally, the fifth information includes a paging cause, and the paging cause is release or activation of the first multicast/broadcast session.

Optionally, the fifth information includes paging event information, and the paging event information indicates that a paging event is release or activation of the first multicast/broadcast session.

The apparatus 800 may implement steps or procedures performed by the first network device in the method embodiment according to embodiments of this application. The apparatus 800 may include units configured to perform the method performed by the first network device in the embodiment shown in FIG. 4, or include units configured to perform the method performed by the RAN, the AMF, or the SMF in the embodiment shown in FIG. 7, or include units configured to perform the method performed by the session management network element or the access management network element in the embodiment shown in FIG. 5, or include units configured to perform the method performed by the AMF or the SMF in the embodiment shown in FIG. 8.

It should be understood that a specific process in which the units perform the foregoing corresponding steps is described in detail in the foregoing method embodiments. For brevity, details are not described herein.

In a design, the apparatus 800 is configured to perform actions performed by the access network device in the method embodiments.

In this case, the apparatus 800 may be the access network device or a component of the access network device. The transceiver unit 810 is configured to perform operations related to receiving and sending on the access network device side in the foregoing method embodiments. The processing unit 820 is configured to perform processing-related operations on the access network device side in the foregoing method embodiments.

In a possible implementation, the transceiver unit 810 is configured to receive sixth information, where the sixth information indicates activation of a first multicast/broadcast session, the sixth information is carried in a fourth message, and the fourth message is used for paging; or the access network device receives a fourth message, where the fourth message is used for activating a first multicast/broadcast session. The processing unit 820 is configured to skip sending a fifth message if terminal devices joining the first multicast/broadcast session include a second terminal device, where the fifth message includes an identifier of the first multicast/broadcast session, the second terminal device is in a radio resource control inactive state, the second terminal device is allowed to receive a first multicast/broadcast service in the radio resource control inactive state, and the first multicast/broadcast session is used for transmitting the first multicast/broadcast service; or the second terminal device is in a radio resource control inactive state, and the second terminal device supports receiving a multicast/broadcast service in the radio resource control inactive state.

The apparatus 800 may implement steps or procedures performed by the access network device in the method embodiment according to embodiments of this application. The apparatus 800 may include units configured to perform the method performed by the access network device in the embodiment shown in FIG. 5, or include units configured to perform the method performed by the RAN in any embodiment shown in FIG. 8.

It should be understood that a specific process in which the units perform the foregoing corresponding steps is described in detail in the foregoing method embodiments. For brevity, details are not described herein.

Optionally, the processing unit 820 is further configured to send a sixth message based on the fourth message, where the sixth message is used for paging a terminal device in an idle state among the terminal devices joining the first multicast/broadcast session.

Optionally, the processing unit 820 is further configured to send the fifth message if none of the terminal devices joining the first multicast/broadcast session is in the radio resource control inactive state.

Optionally, the processing unit 820 is further configured to determine that the terminal devices joining the first multicast/broadcast session include the second terminal device.

Optionally, the second terminal device is in the radio resource control inactive state, and the processing unit 820 is specifically configured to determine that the second terminal device is allowed to receive the first multicast/broadcast service in the radio resource control inactive state.

Optionally, the processing unit 820 is specifically configured to determine, based on at least one of second information and third information, whether the second terminal device is allowed to receive the first multicast/broadcast service in the radio resource control inactive state. The second information indicates that the second terminal device is allowed to receive a multicast/broadcast service in the radio resource control inactive state, and the third information indicates that the first multicast/broadcast service is allowed to be received by a terminal device in the radio resource control inactive state.

Optionally, the transceiver unit 810 is further configured to send at least one of the second information or the third information to the terminal device.

Optionally, the second information is from an access management network element, a session management network element, or a multicast/broadcast session management network element, and the third information is from the access management network element, the session management network element, or the multicast/broadcast session management network element.

Optionally, the second terminal device is in the radio resource control inactive state, and the processing unit 820 is specifically configured to determine that the second terminal device supports receiving a multicast/broadcast service in the radio resource control inactive state.

Optionally, the processing unit 820 is specifically configured to determine, based on fourth information, whether the second terminal device supports receiving a multicast/broadcast service in the radio resource control inactive state, where the fourth information indicates whether the second terminal device supports receiving a multicast/broadcast service in the radio resource control inactive state.

In a design, the apparatus 800 is configured to perform actions performed by the access network device in the method embodiments.

In this case, the apparatus 800 may be the access network device or a component of the access network device. The transceiver unit 810 is configured to perform operations related to receiving and sending on the access network device side in the foregoing method embodiments. The processing unit 820 is configured to perform processing-related operations on the access network device side in the foregoing method embodiments.

In a possible implementation, the transceiver unit 810 is configured to receive a fourth message, where the fourth message is used for paging, the fourth message includes sixth information, and the sixth information indicates release of the first multicast/broadcast session. The processing unit 820 is configured to send a fifth message, where the fifth message includes an identifier of the first multicast/broadcast session.

Optionally, the sixth information is from the access management network element or the session management network element.

The apparatus 800 may implement steps or procedures performed by the access network device in the method embodiment according to embodiments of this application. The apparatus 800 may include units configured to perform the method performed by the access network device in the embodiment shown in FIG. 5, or include units configured to perform the method performed by the RAN in any embodiment shown in FIG. 8.

It should be understood that a specific process in which the units perform the foregoing corresponding steps is described in detail in the foregoing method embodiments. For brevity, details are not described herein.

It should be further understood that the apparatus 800 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the first terminal device, the first network device, the access network device, the access management network element, or the session management network element in the foregoing embodiments, may be configured to perform procedures and/or steps corresponding to the first terminal device, the first network device, the access network device, the access management network element, or the session management network element in the foregoing method embodiments. To avoid repetition, details are not described herein again.

The apparatus 800 in the foregoing solutions has functions of implementing corresponding steps performed by the first terminal device, the first network device, the access network device, the access management network element, or the session management network element in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 810 may alternatively be a transceiver circuit (for example, may include a receiving circuit and a sending circuit), and the processing unit may be a processing circuit.

It should be noted that the apparatus in FIG. 8 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 11 is another diagram of a multicast/broadcast service communication apparatus according to an embodiment of this application.

The apparatus 900 includes a processor 910. The processor 910 is coupled to a memory 920, the memory 920 is configured to store a computer program or instructions and/or data, and the processor 910 is configured to: execute the computer program or the instructions stored in the memory 920, or read the data stored in the memory 920, to perform the method in the foregoing method embodiments. As shown in FIG. 9, the apparatus 900 may further include a transceiver 930, and the transceiver 930 is configured to receive and/or send a signal. For example, the processor 910 is configured to control the transceiver 930 to receive and/or send a signal.

Optionally, there are one or more processors 910.

Optionally, there are one or more memories 920.

Optionally, the memory 920 and the processor 910 are integrated together, or are disposed separately.

In a solution, the apparatus 900 is configured to implement operations performed by the first terminal device, the first network device, the access network device, the access management network element, or the session management network element in the foregoing method embodiments.

For example, the processor 910 is configured to execute the computer program or the instructions stored in the memory 920, to implement related operations of the first terminal device in the foregoing method embodiments, for example, the method performed by the first terminal device in the embodiment shown in FIG. 4 or FIG. 6, or the method performed by the first terminal device or the UE in any one of the embodiments shown in FIG. 4, FIG. 6, FIG. 7, and FIG. 9.

For another example, the processor 910 is configured to execute the computer program or the instructions stored in the memory 920, to implement related operations of the first network device in the foregoing method embodiments, for example, the method performed by the first network device in the embodiment shown in FIG. 4, or the method performed by the first network device, the RAN, the AMF, or the SMF in any one of the embodiments shown in FIG. 4 and FIG. 7.

For another example, the processor 910 is configured to execute the computer program or the instructions stored in the memory 920, to implement related operations of the access network device in the foregoing method embodiments, for example, the method performed by the access network device in the embodiment shown in FIG. 5, or the method performed by the access network device or the RAN in any one of the embodiments shown in FIG. 5 and FIG. 8.

For another example, the processor 910 is configured to execute the computer program or the instructions stored in the memory 920, to implement related operations of the access management network element in the foregoing method embodiments, for example, the method performed by the access management network element in the embodiment shown in FIG. 5, or the method performed by the access management network element or the AMF in any one of the embodiments shown in FIG. 5 and FIG. 8.

For another example, the processor 910 is configured to execute the computer program or the instructions stored in the memory 920, to implement related operations of the session management network element in the foregoing method embodiments, for example, the method performed by the session management network element in the embodiment shown in FIG. 5, or the method performed by the session management network element or the SMF in any one of the embodiments shown in FIG. 5 and FIG. 8.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a communication system, including the session management network element in the method 200 and the access network device in the method 200.

Optionally, the communication system may further include the access management network element in the method 200.

This application further provides a communication system, including the session management network element in the method 200 and the access network device in the method 300.

Optionally, the communication system may further include the access management network element in the method 200.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the word "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multicast/broadcast service communication method, comprising:
receiving, by a first terminal device, first information, wherein the first information indicates activation or release of a first multicast/broadcast session, the first terminal device joins the first multicast/broadcast session, the first terminal device is in a radio resource control inactive state, and the first multicast/broadcast session is used for transmitting a first multicast/broadcast service; and
entering, by the first terminal device, a connected state or keeping in the radio resource control inactive state based on the first information.

2. The method according to claim 1, wherein the keeping, by the first terminal device, in the radio resource control inactive state based on the first information comprises:
keeping, by the first terminal device, in the radio resource control inactive state if the first information indicates activation of the first multicast/broadcast session.

3. The method according to claim 1 or 2, wherein the keeping, by the first terminal device, in the radio resource control inactive state based on the first information comprises:
keeping, by the first terminal device, in the radio resource control inactive state if the first information indicates activation of the first multicast/broadcast session, and the first terminal device is allowed to receive the first multicast/broadcast service in the radio resource control inactive state; or
keeping, by the first terminal device, in the radio resource control inactive state if the first information indicates activation of the first multicast/broadcast session, and the first terminal device supports receiving a multicast/broadcast service in the radio resource control inactive state; or
keeping, by the first terminal device, in the radio resource control inactive state if the first information indicates activation of the first multicast/broadcast session, the first terminal device supports receiving a multicast/broadcast service in the radio resource control inactive state, and the first terminal device is allowed to receive the first multicast/broadcast service in the radio resource control inactive state.

4. The method according to any one of claims 1 to 3, wherein the entering, by the first terminal device, a connected state based on the first information comprises:
entering, by the first terminal device, the connected state if the first information indicates activation of the first multicast/broadcast session, and the first terminal device is not allowed to receive the first multicast/broadcast service in the radio resource control inactive state; or
entering, by the first terminal device, the connected state if the first information indicates activation of the first multicast/broadcast session, and the first terminal device does not support receiving a multicast/broadcast service in the radio resource control inactive state; or
entering, by the first terminal device, the connected state if the first information indicates release of the first multicast/broadcast session.

5. The method according to any one of claims 1 to 4, wherein the first information is from an access network device, an access management network element, a session management network element, a multicast/broadcast session management network element, or an application network element.

6. A multicast/broadcast service communication method, comprising:
receiving, by a first terminal device, an identifier of a first multicast/broadcast session, wherein the first terminal device joins the first multicast/broadcast session, the first terminal device is in a radio resource control inactive state, and the first multicast/broadcast session is used for transmitting a first multicast/broadcast service; and
keeping, by the first terminal device, in the radio resource control inactive state if the first terminal device is allowed to receive the first multicast/broadcast service in the radio resource control inactive state; or
keeping, by the first terminal device, in the radio resource control inactive state if the first terminal device supports receiving a multicast/broadcast service in the radio resource control inactive state; or
keeping, by the first terminal device, in the radio resource control inactive state if the first terminal device supports receiving a multicast/broadcast service in the radio resource control inactive state, and the first terminal device is allowed to receive the first multicast/broadcast service in the radio resource control inactive state.

7. The method according to any one of claims 1, 2, 3, 5, and 6, wherein after the keeping, by the first terminal device, in the radio resource control inactive state, the method further comprises:
receiving, by the first terminal device, the first multicast/broadcast service by using the first multicast/broadcast session.

8. The method according to any one of claims 1 to 7, wherein the method further comprises:
determining, by the first terminal device based on at least one of second information and third information, that the first terminal device is allowed to receive the first multicast/broadcast service in the radio resource control inactive state, wherein
the second information indicates that the first terminal device is allowed to receive a multicast/broadcast service in the radio resource control inactive state, and the third information indicates that the first multicast/broadcast service is allowed to be received by a terminal device in the radio resource control inactive state.

9. The method according to claim 8, wherein the second information is from the access network device, the access management network element, or the session management network element, and the third information is from the access network device, the access management network element, or the session management network element.

10. The method according to any one of claims 1 to 9, wherein the method further comprises:
sending, by the first terminal device, fourth information to a first network element, wherein the fourth information indicates whether the first terminal device supports receiving a multicast/broadcast service in the radio resource control inactive state; wherein
the first network element is the access network device, the access management network element, the session management network element, or the application network element.

11. The method according to any one of claims 1 to 10, wherein the first terminal device is located in a service area of the first multicast/broadcast session.

12. A multicast/broadcast service communication method, comprising:
receiving, by a first network device, event information, wherein the event information comprises an event identifier or an event type, and the event information indicates activation or release of a first multicast/broadcast session; and
sending, by the first network device, fifth information based on the event information, wherein the fifth information indicates activation or release of the first multicast/broadcast session.

13. The method according to claim 12, wherein the first network device is a session management network element, the fifth information comprises indication information, and the indication information indicates activation or release of the first multicast/broadcast session.

14. The method according to claim 12 or 13, wherein the fifth information is carried in a first message, and the first message is used for requesting reachability of a terminal device.

15. The method according to claim 13 or 14, wherein the method further comprises:
obtaining, by the first network device, second information and/or third information, wherein the second information indicates that the terminal device is allowed to receive a multicast/broadcast service in a radio resource control inactive state, the third information indicates that a first multicast/broadcast service is allowed to be received by a terminal device in the radio resource control inactive state, and the first multicast/broadcast session is used for transmitting the first multicast/broadcast service; and
sending, by the first network device, the second information and/or the third information to an access management network element or an access network device.

16. The method according to claim 15, wherein the obtaining, by the first network device, second information and/or third information comprises:
receiving, by the first network device, the second information and/or the third information from a multicast/broadcast session management network element or a policy control function network element.

17. The method according to any one of claims 13 to 16, wherein the method further comprises:
receiving, by the first network device, fourth information from the terminal device, wherein the fourth information indicates whether the terminal device supports receiving a multicast/broadcast service in the radio resource control inactive state; and
sending, by the first network device, the fourth information to the access management network element or the access network device.

18. The method according to claim 12, wherein the first network device is an access management network element, the event information is carried in a first message, and the first message is used for requesting reachability of a terminal device.

19. The method according to claim 12 or 18, wherein the fifth information is carried in a second message, and the second message comprises a group paging message.

20. The method according to claim 18 or 19, wherein the method further comprises:
receiving, by the first network device, second information and/or third information from a session management network element, wherein the second information indicates that the terminal device is allowed to receive a multicast/broadcast service in a radio resource control inactive state, the third information indicates that a first multicast/broadcast service is allowed to be received by a terminal device in the radio resource control inactive state, and the first multicast/broadcast session is used for transmitting the first multicast/broadcast service; and
sending, by the first network device, the second information and/or the third information to an access network device.

21. The method according to any one of claims 18 to 20, wherein the method further comprises:
obtaining, by the first network device, fourth information, wherein the fourth information indicates whether the terminal device supports receiving a multicast/broadcast service in the radio resource control inactive state; and
sending, by the first network device, the fourth information to the access network device.

22. The method according to claim 21, wherein the sending, by the first network device, the fourth information to the access network device comprises:
sending, by the first network device, the fourth information to the access network device by using a terminal device context modification request message or an initial context setup request message.

23. The method according to claim 21 or 22, wherein the obtaining, by the first network device, fourth information comprises:
receiving, by the first network device, the fourth information from the terminal device or a unified data management network element.

24. The method according to claim 12, wherein the first network device is an access network device, the event information is carried in a second message, and the second message comprises a group paging message.

25. The method according to claim 12 or 24, wherein the fifth information is carried in a third message, the third message is used for paging, and the third message comprises an identifier of the first multicast/broadcast session.

26. The method according to claim 24 or 25, wherein the method further comprises:
receiving, by the first network device, second information and/or third information, wherein the second information indicates that a terminal device is allowed to receive a multicast/broadcast service in a radio resource control inactive state, the third information indicates that a first multicast/broadcast service is allowed to be received by a terminal device in the radio resource control inactive state, and the first multicast/broadcast session is used for transmitting the first multicast/broadcast service; and
sending, by the first network device, the second information and/or the third information to the terminal device.

27. The method according to any one of claims 24 to 26, wherein the method further comprises:
receiving, by the first network device, fourth information, wherein the fourth information indicates whether the terminal device supports receiving a multicast/broadcast service in the radio resource control inactive state.

28. The method according to claim 27, wherein the fourth information is carried in a terminal device context modification request message or an initial context setup request message.

29. The method according to any one of claims 18 to 28, wherein the fifth information comprises a paging cause, and the paging cause is release or activation of the first multicast/broadcast session.

30. The method according to any one of claims 12 to 28, wherein the fifth information comprises paging event information, and the paging event information indicates that a paging event is release or activation of the first multicast/broadcast session.

31. A multicast/broadcast service communication method, comprising:
receiving, by an access network device, sixth information, wherein the sixth information indicates activation of a first multicast/broadcast session, the sixth information is carried in a fourth message, and the fourth message is used for paging; or
receiving, by an access network device, a fourth message, wherein the fourth message is used for activating a first multicast/broadcast session; and
if terminal devices joining the first multicast/broadcast session comprise a second terminal device, skipping, by the access network device, sending a fifth message, wherein the fifth message is used for paging, and the fifth message comprises an identifier of the first multicast/broadcast session; wherein
the second terminal device is in a radio resource control inactive state, and the second terminal device is allowed to receive a first multicast/broadcast service in the radio resource control inactive state, wherein the first multicast/broadcast session is used for transmitting the first multicast/broadcast service; or
the second terminal device is in a radio resource control inactive state, and the second terminal device supports receiving a multicast/broadcast service in the radio resource control inactive state.

32. The method according to claim 31, wherein the method further comprises:
sending, by the access network device, a sixth message based on the fourth message, wherein the sixth message is used for paging a terminal device in an idle state among the terminal devices joining the first multicast/broadcast session.

33. The method according to claim 31 or 32, wherein the method further comprises:
sending, by the access network device, the fifth message if none of the terminal devices joining the first multicast/broadcast session is in the radio resource control inactive state.

34. The method according to any one of claims 31 to 33, wherein the method further comprises:
determining, by the access network device, that the terminal devices joining the first multicast/broadcast session comprise the second terminal device.

35. The method according to claim 34, wherein the second terminal device is in the radio resource control inactive state, and the determining, by the access network device, that the terminal devices joining the first multicast/broadcast session comprise the second terminal device comprises:
determining, by the access network device, that the second terminal device is allowed to receive the first multicast/broadcast service in the radio resource control inactive state.

36. The method according to claim 35, wherein the determining, by the access network device, that the second terminal device is allowed to receive the first multicast/broadcast service in the radio resource control inactive state comprises:
determining, by the access network device based on at least one of second information and third information, that the second terminal device is allowed to receive the first multicast/broadcast service in the radio resource control inactive state, wherein
the second information indicates that the second terminal device is allowed to receive a multicast/broadcast service in the radio resource control inactive state, and the third information indicates that the first multicast/broadcast service is allowed to be received by a terminal device in the radio resource control inactive state.

37. The method according to claim 35, wherein the method further comprises:
sending, by the access network device, at least one of second information or third information to the second terminal device.

38. The method according to claim 35 or 36, wherein the second information is from an access management network element, a session management network element, or a multicast/broadcast session management network element, and the third information is from the access management network element, the session management network element, or the multicast/broadcast session management network element.

39. The method according to claim 34, wherein the second terminal device is in the radio resource control inactive state, and the determining, by the access network device, that the terminal devices joining the first multicast/broadcast session comprise the second terminal device comprises:
determining, by the access network device, that the second terminal device supports receiving a multicast/broadcast service in the radio resource control inactive state.

40. The method according to claim 38, wherein the determining, by the access network device, that the second terminal device supports receiving a multicast/broadcast service in the radio resource control inactive state comprises:
determining, by the access network device based on fourth information, that the second terminal device supports receiving a multicast/broadcast service in the radio resource control inactive state, wherein
the fourth information indicates whether the second terminal device supports receiving a multicast/broadcast service in the radio resource control inactive state.

41. A multicast/broadcast communication apparatus, comprising:
a processor, configured to execute a computer program stored in a memory, to enable the apparatus to perform the method according to any one of claims 1 to 11, any one of claims 12 to 30, or any one of claims 31 to 40.

42. The apparatus according to claim 41, wherein the apparatus further comprises the memory.

43. A computer-readable storage medium, wherein the computer-readable storage medium stores a computer program, and when the computer program runs on a computer, the computer is enabled to perform the method according to any one of claims 1 to 11, any one of claims 12 to 30, or any one of claims 31 to 40.

44. A computer program product, wherein the computer program product comprises instructions used to perform the method according to any one of claims 1 to 11, any one of claims 12 to 30, or any one of claims 31 to 40.

## Amended claims

### Amended claims under Art. 19.1 PCT

1. A multicast/broadcast service communication method, comprising:
receiving, by a first terminal device, a seventh message, wherein the seventh message is used for paging, the seventh message comprises an identifier of a first multicast/broadcast session, the first terminal device has joined the first multicast/broadcast session, the first terminal device is in a radio resource control inactive state, and the first multicast/broadcast session is used for transmitting a first multicast/broadcast service; and
keeping, by the first terminal device, in the radio resource control inactive state if the first terminal device is allowed to receive the first multicast/broadcast session in the radio resource control inactive state; or
keeping, by the first terminal device, in the radio resource control inactive state if the first terminal device supports receiving a multicast/broadcast service in the radio resource control inactive state and the first terminal device is allowed to receive the first multicast/broadcast session in the radio resource control inactive state.

2. The method according to claim 1, wherein after the keeping, by the first terminal device, in the radio resource control inactive state, the method further comprises:
receiving, by the first terminal device, the first multicast/broadcast service by using the first multicast/broadcast session, wherein the first terminal device is in the radio resource control inactive state.

3. The method according to claim 1 or 2, wherein the method further comprises:
determining, by the first terminal device based on second information, that the first terminal device is allowed to receive the first multicast/broadcast session in the radio resource control inactive state, wherein
the second information indicates that the first multicast/broadcast session is allowed to be received by a terminal device in the radio resource control inactive state.

4. The method according to claim 3, wherein the second information is of an enumeration type.

5. The method according to claim 3 or 4, wherein the method further comprises:
receiving, by the first terminal device, the second information from a paging message.

6. The method according to any one of claims 3 to 5, wherein the second information is from an access network device.

7. The method according to any one of claims 1 to 6, wherein the method further comprises:
sending, by the first terminal device, fourth information to the access network device, wherein the fourth information indicates whether the first terminal device supports receiving a multicast/broadcast service in the radio resource control inactive state.

8. The method according to claim 7, wherein the fourth information is carried in a radio resource control RRC message.

9. The method according to any one of claims 1 to 8, wherein the first terminal device is located in a service area of the first multicast/broadcast session.

10. The method according to any one of claims 1 to 9, wherein the seventh message is a paging message.

11. A multicast/broadcast service communication method, comprising:
determining, by an access network device, that a terminal device is allowed to receive a first multicast/broadcast session in a radio resource control inactive state; and
sending, by the access network device, second information to the terminal device, wherein the second information indicates that the first multicast/broadcast session is allowed to be received by a terminal device in the radio resource control inactive state.

12. The method according to claim 11, wherein the determining, by an access network device, that a terminal device is allowed to receive a first multicast/broadcast session in a radio resource control inactive state comprises:
determining, by the access network device based on third information, that the terminal device is allowed to receive the first multicast/broadcast session in the radio resource control inactive state, wherein the third information comprises a fifth generation 5G quality of service QoS identifier and/or an allocation and retention priority of the first multicast/broadcast session.

13. The method according to claim 12, wherein the third information is from a multicast/broadcast session management network element.

14. The method according to any one of claims 11 to 13, wherein the method further comprises:
determining, by the access network device, that the terminal device supports receiving a multicast/broadcast service in the radio resource control inactive state.

15. The method according to any one of claims 11 to 14, wherein the method further comprises:
receiving, by the access network device, fourth information, wherein the fourth information indicates whether the terminal device supports receiving a multicast/broadcast service in the radio resource control inactive state.

16. The method according to claim 15, wherein the fourth information is carried in a radio resource control RRC message.

17. A multicast/broadcast service communication method, comprising:
receiving, by a first network device, event information, wherein the event information comprises an event identifier or an event type, and the event information indicates activation or release of a first multicast/broadcast session; and
sending, by the first network device, fifth information based on the event information, wherein the fifth information indicates activation or release of the first multicast/broadcast session.

18. The method according to claim 17, wherein the first network device is a session management network element, the fifth information comprises indication information, and the indication information indicates activation or release of the first multicast/broadcast session.

19. The method according to claim 17 or 18, wherein the fifth information is carried in a first message, and the first message is used for requesting reachability of a terminal device.

20. The method according to claim 18 or 19, wherein the method further comprises:
obtaining, by the first network device, second information and/or third information, wherein the second information indicates that the terminal device is allowed to receive the first multicast/broadcast session in a radio resource control inactive state, the third information indicates that the first multicast/broadcast session is allowed to be received by a terminal device in the radio resource control inactive state, and the first multicast/broadcast session is used for transmitting a first multicast/broadcast service; and
sending, by the first network device, the second information and/or the third information to an access management network element or an access network device.

21. The method according to claim 20, wherein the obtaining, by the first network device, second information and/or third information comprises:
receiving, by the first network device, the second information and/or the third information from a multicast/broadcast session management network element or a policy control function network element.

22. The method according to claim 20 or 21, wherein the third information comprises a fifth generation 5G quality of service QoS identifier and/or an allocation and retention priority of the first multicast/broadcast session.

23. The method according to any one of claims 18 to 22, wherein the method further comprises:
receiving, by the first network device, fourth information from the terminal device, wherein the fourth information indicates whether the terminal device supports receiving a multicast/broadcast service in the radio resource control inactive state; and
sending, by the first network device, the fourth information to the access management network element or the access network device.

24. The method according to claim 17, wherein the first network device is an access management network element, the event information is carried in a first message, and the first message is used for requesting reachability of a terminal device.

25. The method according to claim 17 or 24, wherein the fifth information is carried in a second message, and the second message comprises a group paging message.

26. The method according to claim 24 or 25, wherein the method further comprises:
receiving, by the first network device, second information and/or third information from a session management network element, wherein the second information indicates that the terminal device is allowed to receive the first multicast/broadcast session in a radio resource control inactive state, the third information indicates that the first multicast/broadcast session is allowed to be received by a terminal device in the radio resource control inactive state, and the first multicast/broadcast session is used for transmitting a first multicast/broadcast service; and
sending, by the first network device, the second information and/or the third information to an access network device.

27. The method according to claim 17, wherein the first network device is an access network device, the event information is carried in a second message, and the second message comprises a group paging message.

28. The method according to claim 17 or 27, wherein the fifth information is carried in a third message, the third message is used for paging, and the third message comprises an identifier of the first multicast/broadcast session.

29. The method according to any one of claims 24 to 28, wherein the fifth information comprises a paging cause, and the paging cause is release or activation of the first multicast/broadcast session.

30. The method according to any one of claims 17 to 28, wherein the fifth information comprises paging event information, and the paging event information indicates that a paging event is release or activation of the first multicast/broadcast session.

31. A multicast/broadcast communication apparatus, comprising:
a processor, configured to execute a computer program stored in a memory, to enable the apparatus to perform the method according to any one of claims 1 to 10, any one of claims 11 to 16, or any one of claims 17 to 30.

32. The apparatus according to claim 31, wherein the apparatus further comprises the memory.

33. A computer-readable storage medium, wherein the computer-readable storage medium stores a computer program, and when the computer program runs on a computer, the computer is enabled to perform the method according to any one of claims 1 to 10, any one of claims 11 to 16, or any one of claims 17 to 30.

34. A computer program product, wherein the computer program product comprises instructions used to perform the method according to any one of claims 1 to 10, any one of claims 11 to 16, or any one of claims 17 to 30.

35. A communication system, comprising at least one of a communication apparatus configured to execute the method according to any one of claims 1 to 10, a communication apparatus configured to execute the method according to any one of claims 11 to 16, or a communication apparatus configured to execute the method according to any one of claims 17 to 30.
